# EUROPEAN PATENT APPLICATION

(11) **EP 4 789 781 A1**
(43) Date of publication of application: **12.08.2026**
(21) Application number: 24888292.0
(22) Date of filing: 04.07.2024
(51) Int. Cl.: B07C 5/34, B09B 5/00, G06T 7/70

(54) **FOREIGN MATTER SEPARATION SYSTEM, FOREIGN MATTER SEPARATION METHOD, PROGRAM, AND COMPUTER-READABLE RECORDING MEDIUM STORING PROGRAM**

(30) Priority: 09.11.2023 JP 2023191619
(71) Applicant: JFE Steel Corporation, Tokyo 100-0011 (JP)
(72) Inventor: NAGAYA Hiroki, Tokyo 100-0011 (JP); ISHIGAKI Yusuke, Tokyo 100-0011 (JP); NISHINA Yoshiaki, Tokyo 100-0011 (JP)
(74) Representative: Hoffmann Eitle
(86) International application number: PCT/JP2024/024316
(87) International publication number: WO 2025/099990

(57) **Abstract**

Provided is a foreign matter separation system and so on, each of which can automatically remove foreign matter contained in a scrap pile and reduce the amount of scrap to be removed together with the foreign matter in the scrap pile. A control device (30) of a foreign matter separation system (1) specifies positional information on foreign matter (D) in a scrap pile (SS) and specification information on the foreign matter (D) when the foreign matter (D) in the scrap pile (SS) is detected from a captured image (G) captured by an imaging device (10), determines a movement condition of the transport device (20) based on the specified positional information on the foreign matter (D), and determines a transport condition for transporting the foreign matter (D) using the transport device (20), based on the specified specification information on the foreign matter (D). The control device (30) controls the transport device (20) such that the transport device (20) moves under the movement condition of the transport device (20) and lifts and transports the foreign matter (D) that is placed to a foreign-matter loading area (52) under the transport condition for transporting the foreign matter (D) using the transport device (20).

## Description

### Technical Field

The present invention relates to a foreign matter separation system, a foreign matter separation method, a program, and a computer-readable recording medium storing the program, each for separating foreign matter contained in a scrap pile from scrap.

### Background Art

In steel works, in order to reduce environmental impacts in the production of steel products, it is desirable to increase the use of iron-based scrap as an iron source. Generally, an iron-based scrap pile consisting of multiple pieces of iron-based scrap contains foreign matter such as materials of different types and sizes from iron-based scrap, unwanted materials, sealed materials, and hazardous materials, which are unwanted when the iron-based scrap is used.

In the related art, as a method for automatically detecting foreign matter contained in an iron-based scrap pile, PTL 1 proposes an iron scrap inspection method, for example.

In the iron scrap inspection method described in PTL 1 in cooperation with an iron-scrap yard facility, an iron scrap pile loaded on a loading deck of a truck parked at a truck stop position is inspected. This inspection method includes: an imaging step of capturing an image of the iron scrap pile loaded on the loading deck of the truck parked at the truck stop position; an inspection step of inspecting the iron scrap pile in imaging data in such a manner that a detection device determines whether or not any unwanted material is captured in imaging data with the use of a learning model as for unwanted materials that are more likely to be contained in the iron scrap pile, and if an unwanted material is captured in the imaging data, an operator is instructed to remove the unwanted material; and a moving step of moving the inspected iron scrap pile captured in the imaging data with the use of a lift magnet or the like to an inspected-iron-scrap storage yard from the loading deck of the truck. These steps are repeated until the whole scrap pile is removed from the loading deck of the truck. Hereby, unwanted materials can be effectively detected from the iron scrap pile loaded on the loading deck of the truck.

In the meantime, as a method for detecting foreign matter mixed in iron-based scrap and removing the detected foreign matter in the related art, PTL 2 proposes a foreign matter detection device and a foreign matter removal device, for example.

The foreign matter detection device described in PTL 2 includes: a target object image acquisition unit configured to acquire a target object image of a target object containing iron-based scrap; and an image determination unit configured to detect foreign matter by identifying iron-based scrap and foreign matter other than the iron-based scrap from the target object based on the target object image. The foreign matter removal device described in PTL 2 includes: the foreign matter detection device; a foreign matter position specifying unit configured to specify the position of the foreign matter in an actual space based on the determination result from a type determination unit; and a foreign matter removal unit configured to remove the foreign matter from the target object based on the position of the foreign matter, specified by the foreign matter position specifying unit. The foreign matter removal unit includes a gripper movable in three-dimensional directions relative to the target object containing the iron-based scrap.

Hereby, foreign matter can be accurately detected by the foreign matter detection device from iron-based scrap mixed with the foreign matter, and the foreign matter can be removed from the target object by the foreign matter removal device.

### Citation List

### Patent Literatures

PTL 1: JP 2020-176909 A
PTL 2: JP 2021-163078 A

### Summary of Invention

### Technical Problem

However, the iron scrap inspection method described in PTL 1 and the foreign matter detection device and the foreign matter removal device described in PTL 2 in the related art have the following problems.

That is, in the case of the iron scrap inspection method described in PTL 1, the detection device can detect unwanted materials contained in the iron scrap pile, but it is necessary for the operator to remove the unwanted materials by a manual operation or the like.

In the case of the foreign matter detection device and the foreign matter removal device described in PTL 2, foreign matter can be automatically removed. However, it is difficult to lift only foreign matter contained in the iron-based scrap pile depending on the gripper of the foreign matter removal unit, and iron-based scrap that is not targeted for removal might be lifted and removed together with the foreign matter.

Accordingly, the present invention is achieved in order to solve these problems in the related art, and an object of the present invention is to provide a foreign matter separation system, a foreign matter separation method, a program, and a computer-readable recording medium storing the program, each of which can automatically remove foreign matter contained in a scrap pile and reduce the amount of scrap to be removed together with the foreign matter in the scrap pile.

### Solution to Problem

In order to achieve the above object, a foreign matter separation system according to one aspect of the present invention is a foreign matter separation system for separating foreign matter contained in a scrap pile from scrap. The foreign matter separation system includes: an imaging device configured to capture an image of the scrap pile that is placed; a transport device configured to lift and transport the foreign matter or the scrap in the scrap pile that is placed; and a control device configured to control the imaging device and the transport device in the following manner: the control device detects the foreign matter in the scrap pile from the captured image captured by the imaging device; the control device specifies positional information on the foreign matter in the scrap pile and specification information on the foreign matter in the scrap pile when the foreign matter in the scrap pile is detected; the control device determines a movement condition of the transport device based on the specified positional information on the foreign matter; the control device determines a transport condition for transporting the foreign matter using the transport device, based on the specified specification information on the foreign matter; the control device controls the transport device such that the transport device moves under the determined movement condition of the transport device; and the control device controls the transport device such that the transport device lifts and transports the foreign matter that is placed to a foreign-matter loading area under the determined transport condition for transporting the foreign matter using the transport device.

A foreign matter separation method according to one aspect of the present invention is a foreign matter separation method for separating foreign matter contained in a scrap pile from scrap. The foreign matter separation method includes: a control device controlling an imaging device such that the imaging device captures an image of the scrap pile that is placed; the control device detecting the foreign matter in the scrap pile from the captured image; the control device specifying positional information on the foreign matter in the scrap pile when the foreign matter in the scrap pile is detected; the control device specifying specification information on the foreign matter in the scrap pile when the foreign matter in the scrap pile is detected; the control device determining a movement condition of a transport device based on the specified positional information on the foreign matter; the control device determining a transport condition for transporting the foreign matter using the transport device based on the specified specification information on the foreign matter; the control device controlling the transport device such that the transport device moves under the determined movement condition of the transport device; and the control device controlling the transport device such that the transport device lifts and transports the foreign matter to a foreign-matter loading area under the determined transport condition for transporting the foreign matter using the transport device.

A program according to one aspect of the present invention is a program causing a control device to execute the followings: controlling an imaging device to capture an image of a scrap pile that is placed; detecting foreign matter in the scrap pile from the captured image; specifying positional information on the foreign matter in the scrap pile when the foreign matter in the scrap pile is detected; specifying specification information on the foreign matter in the scrap pile when the foreign matter in the scrap pile is detected; determining a movement condition of a transport device based on the specified positional information on the foreign matter; determining a transport condition for transporting the foreign matter using the transport device, based on the specified specification information on the foreign matter; controlling the transport device such that the transport device moves under the determined movement condition of the transport device; and controlling the transport device such that the transport device lifts and transports the foreign matter to a foreign-matter loading area under the determined transport condition for transporting the foreign matter using the transport device.

A computer-readable recording medium storing a program, according to another aspect of the present invention, is a computer-readable recording medium storing a program causing a control device to execute the followings: controlling an imaging device to capture an image of a scrap pile that is placed; detecting foreign matter in the scrap pile from the captured image; specifying positional information on the foreign matter in the scrap pile when the foreign matter in the scrap pile is detected; specifying specification information on the foreign matter in the scrap pile when the foreign matter in the scrap pile is detected; determining a movement condition of a transport device based on the specified positional information on the foreign matter; determining a transport condition for transporting the foreign matter using the transport device, based on the specified specification information on the foreign matter; controlling the transport device such that the transport device moves under the determined movement condition of the transport device; and controlling the transport device such that the transport device lifts and transports the foreign matter to a foreign-matter loading area under the determined transport condition for transporting the foreign matter using the transport device.

### Advantageous Effects of Invention

With the foreign matter separation system, the foreign matter separation method, the program, and the computer-readable recording medium storing the program according to the present invention, it is possible to automatically remove foreign matter contained in a scrap pile and reduce the amount of scrap to be removed with the foreign matter in the scrap pile.

### Brief Description of Drawings

FIG. 1 is an overall configuration diagram of a foreign matter separation system according to a first embodiment of the present invention;
FIG. 2 is a functional block diagram of the foreign matter separation system illustrated in FIG. 1;
FIG. 3 is a flowchart to describe the flow of a process in the foreign matter separation system illustrated in FIG. 1;
FIG. 4 is a view to describe one example of a hardware configuration of a control device;
FIG. 5 is a view illustrating an example of a captured image of a scrap pile placed on a semi-trailer, taken by an imaging device when foreign matter is to be separated by the foreign matter separation system illustrated in FIGS. 1 and 2;
FIG. 6 is a view to describe a method for adjusting the distance between a magnet surface of a lifting magnet and foreign matter, as one example of a transport condition for transporting the foreign matter using the lifting magnet constituting a transport device;
FIG. 7 is a view to describe a method for adjusting a contact area between the lifting magnet and the foreign matter, as one example of the transport condition using the lifting magnet constituting the transport device;
FIG. 8 is a functional block diagram of a foreign matter separation system according to a second embodiment of the present invention;
FIG. 9 is a flowchart to describe the flow of a process in the foreign matter separation system illustrated in FIG. 8;
FIG. 10 illustrates examples of a captured image of a scrap pile placed on a loading deck of the semi-trailer, taken by the imaging device, with the upper side of FIG. 10 illustrating a captured image of the initial state of the scrap pile placed on the loading deck of the semi-trailer, and the lower side of FIG. 10 illustrating a captured image after foreign matter having a large degree of exposure and scrap covering foreign matter having a small degree of exposure are removed from the initial state;
FIG. 11 is a view to describe a transport condition for transporting foreign matter in a case where a grapple is used as the transport device;
FIG. 12 is a view to describe a transport condition for transporting foreign matter in a case where a shovel is used as the transport device;
FIG. 13 is a view illustrating an example of a captured image of a scrap pile placed on the semi-trailer, taken by the imaging device when foreign matter contained in the scrap pile is separated from scrap with the use of a foreign matter separation system according to a modification; and
FIG. 14 is a view illustrating an example in which foreign matter contained in the scrap pile is separated from scrap by controlling the lifting magnet as the transport device with the use of the foreign matter separation system according to the modification when the scrap cannot be lifted due to the foreign matter being obstructive, with the upper side of FIG. 14 illustrating a state of the loading deck of the semi-trailer viewed from above, and the lower side of FIG. 14 illustrating a state of the loading deck of the semi-trailer viewed from its lateral side.

### Description of Embodiments

The following describes embodiments of the present invention with reference to the drawings. The embodiments described below deal with a device or a method to embody the technical idea of the present invention, and the technical idea of the present invention does not specify the quality, shape, structure, arrangement, and the like of components to those of the embodiments described below.

The drawings are schematic. Accordingly, it should be noted that the relationship, ratio, and the like between thickness and planar dimension are different from actual ones, and the drawings include respective parts different in dimensional relationship or ratio.

### (First Embodiment)

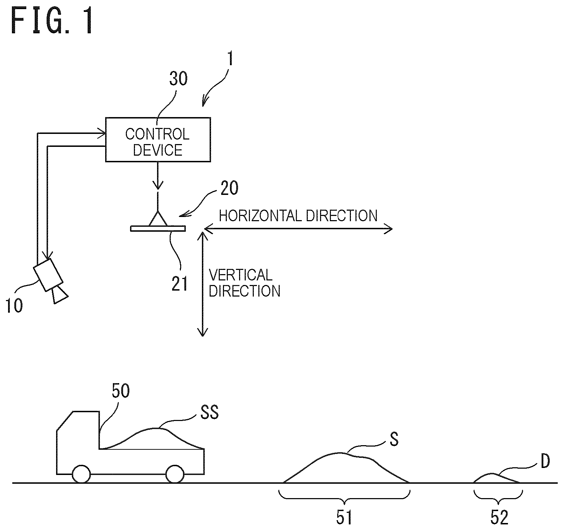

FIG. 1 is an overall configuration diagram of a foreign matter separation system according to a first embodiment of the present invention.

The foreign matter separation system 1 illustrated in FIG. 1 is configured to separate foreign matter D contained in a scrap pile SS from scrap S. In the present embodiment, the scrap pile SS is placed on the loading deck of a semi-trailer 50 and transported to a predetermined position.

The scrap pile SS contains one or more pieces of foreign matter D in addition to a plurality of pieces of scrap (iron-based scrap) S in some cases. Here, the foreign matter D refers to any material that is undesirable when the scrap S is used. The scrap S refers to materials of various types and sizes, unwanted materials, sealed materials, hazardous materials, and similar materials. In the present embodiment, the foreign matter D includes, for example: items containing tramp elements, such as motors; items in which enclosed air may explode, such as sealed materials; items unsuitable for use, such as oversize articles; and non-iron-based, non-metallic materials such as rubber.

The scrap S and the foreign matter D in the scrap pile SS placed on the loading deck of the semi-trailer 50 are separated by the foreign matter separation system 1 and transported to a scrap loading area 51 and a foreign-matter loading area 52, respectively.

The foreign matter separation system 1 includes an imaging device 10, a transport device 20, and a control device 30.

The imaging device 10 is a camera configured to capture an image of the scrap pile SS placed on the loading deck of the semi-trailer 50 from above the loading deck.

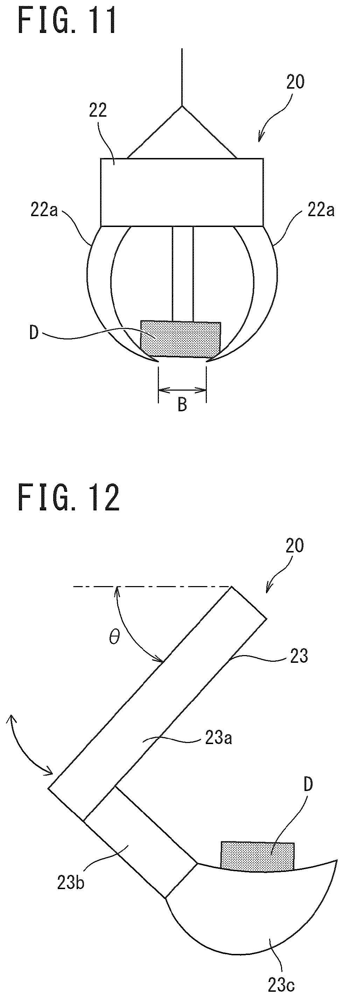

When the foreign matter D is detected from the scrap pile SS placed on the loading deck of the semi-trailer 50 (when a foreign matter detecting section 33 (described later) detects the foreign matter D), the transport device 20 lifts and transports the foreign matter D (some scrap S may be also included in addition to the foreign matter D). When no foreign matter D is detected (when the foreign matter detecting section 33 (described later) detects no foreign matter D), the transport device 20 lifts and transports the scrap S in the scrap pile SS. In the present embodiment, the transport device 20 is a lifting magnet 21 configured to magnetically attract the foreign matter D or the scrap by magnetic force to lift and transport the foreign matter D or the scrap S. In the present embodiment, the transport device 20 is used as the lifting magnet 21 for lifting and transporting the foreign matter D and as the lifting magnet 21 for lifting and transporting the scrap S. However, a transport device for exclusive use of removing the foreign matter D by transport may be used separately from the lifting magnet 21 for transporting the scrap S. Note that the transport device 20 is not limited to the lifting magnet 21 and may be a grapple 22 as illustrated in FIG. 11 or may be a shovel 23 as illustrated in FIG. 12, for example, as will be described later. The lifting magnet 21 as the transport device 20 is movable vertically and horizontally, as illustrated in FIG. 1. The lifting magnet 21 moves vertically downward and holds the foreign matter D or the scrap S, moves vertically upward to lift the foreign matter D or the scrap S thus held, and then moves horizontally to transport the foreign matter D or the scrap S thus lifted.

The control device 30 is configured to control the imaging device 10 and the lifting magnet 21 as the transport device 20.

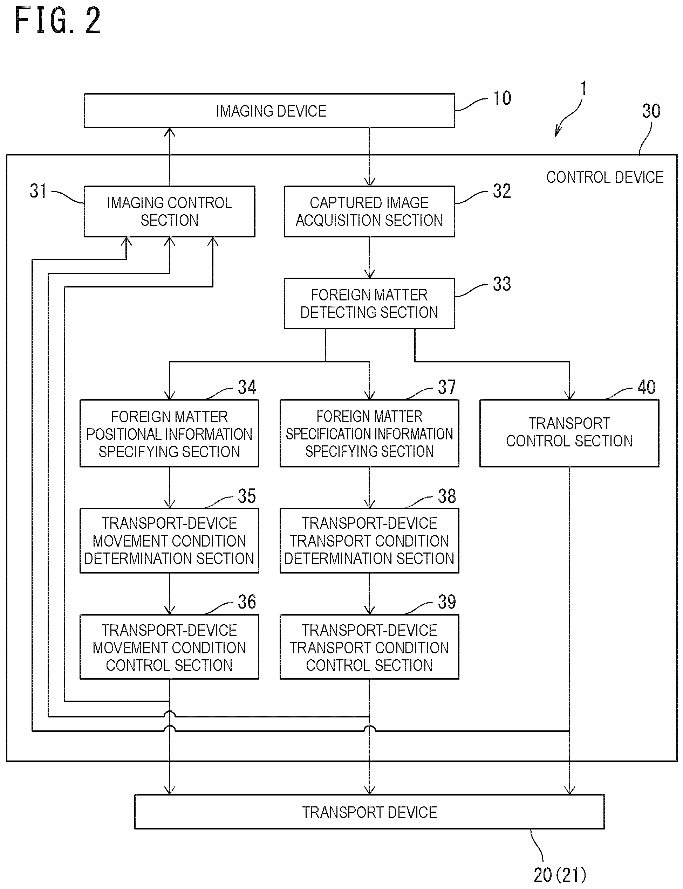

As illustrated in FIG. 2, the control device 30 includes an imaging control section 31, a captured image acquisition section 32, a foreign matter detecting section 33, a foreign matter positional information specifying section 34, a transport-device movement condition determination section 35, a transport-device movement condition control section 36, a foreign matter specification information specifying section 37, a transport-device transport condition determination section 38, a transport-device transport condition control section 39, and a transport control section 40.

The imaging control section 31 controls the imaging device 10 to capture an image of the scrap pile SS placed on the loading deck of the semi-trailer 50.

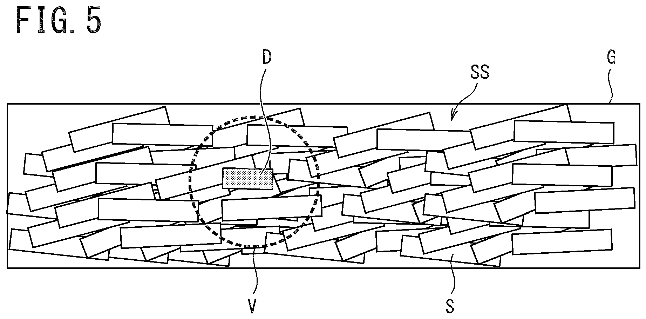

The captured image acquisition section 32 acquires a captured image G (see FIG. 5) captured by the imaging device 10. FIG. 5 illustrates an example of the captured image G acquired by the captured image acquisition section 32.

The foreign matter detecting section 33 detects the foreign matter D in the scrap pile SS from the captured image G acquired by the captured image acquisition section 32. Any method is usable as a method for detecting the foreign matter D from the captured image G by the foreign matter detecting section 33. In the present embodiment, the foreign matter detecting section 33 detects the foreign matter D in the scrap pile SS in such a manner that the captured image G acquired by the captured image acquisition section 32 is input into a learning model trained using captured images of the scrap pile SS containing the foreign matter D. That is, the foreign matter detecting section 33 determines whether or not the foreign matter D is present in the scrap pile SS. In the example of FIG. 5, one piece of foreign matter D in the scrap pile SS is detected.

The foreign matter positional information specifying section 34 specifies the position (position coordinate) of the foreign matter D in the scrap pile SS from the captured image G when the foreign matter D in the scrap pile SS is detected by the foreign matter detecting section 33.

The transport-device movement condition determination section 35 determines a movement condition of the lifting magnet 21 constituting the transport device 20, based on the position (position coordinate) of the foreign matter D in the scrap pile SS, the position being specified by the foreign matter positional information specifying section 34. Here, the "movement condition" is a position condition of a destination, in the horizontal direction, of the lifting magnet 21 constituting the transport device 20. In the example illustrated in FIG. 5, the movement condition is a position V right above the foreign matter D in the scrap pile SS that is placed.

The transport-device movement condition control section 36 controls the lifting magnet 21 constituting the transport device 20 such that the lifting magnet 21 moves under the movement condition of the lifting magnet 21 which movement condition is determined by the transport-device movement condition determination section 35. In the example illustrated in FIG. 5, the transport-device movement condition control section 36 controls the lifting magnet 21 such that the lifting magnet 21 moves horizontally to the position V right above the foreign matter D in the scrap pile SS that is placed.

The foreign matter specification information specifying section 37 specifies specification information on the foreign matter D in the scrap pile SS when the foreign matter D in the scrap pile SS is detected by the foreign matter detecting section 33. Here, the "specification information" is information for specifying the foreign matter D and is, for example, at least one of the type of the foreign matter D, the estimated weight of the foreign matter D, and the length or size of the foreign matter D. Any method is usable for the foreign matter specification information specifying section 37 to specify the specification information on the foreign matter D. In the present embodiment, the foreign matter specification information specifying section 37 specifies the specification information on the foreign matter D by inputting the captured image G into a learning model trained using data set in which images corresponding to each type of the foreign matter D are associated with the type name of the foreign matter D, the weight of the foreign matter D, or the length and size of the foreign matter D.

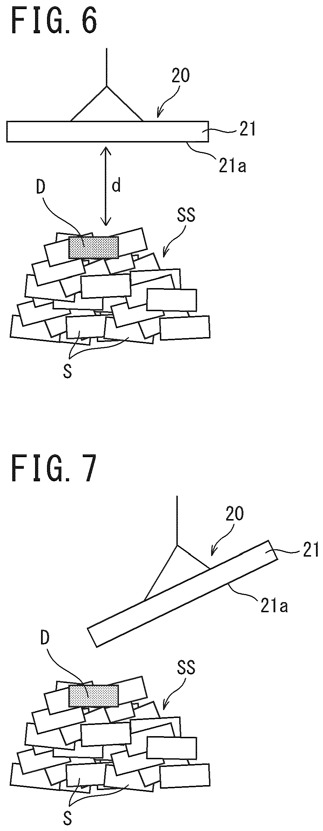

The transport-device transport condition determination section 38 determines a transport condition for transporting the foreign matter D using the lifting magnet 21 as the transport device 20 based on the specification information on the foreign matter D which specification information is specified by the foreign matter specification information specifying section 37. Here, the "transport condition" is a condition of the lifting magnet 21 at the time of lifting the foreign matter D. For example, the transport condition is at least one of the magnetic force strength of the lifting magnet 21, a distance d between a magnet surface 21a of the lifting magnet 21 and the foreign matter D (see FIG. 6), and the contact area of the lifting magnet 21 with the foreign matter D. That is, the transport-device transport condition determination section 38 determines a transport condition for transporting the foreign matter D using the lifting magnet 21 by lifting only the foreign matter D (for example, at least one of the magnetic force strength of the lifting magnet 21, the distance d between the magnet surface 21a of the lifting magnet 21 and the foreign matter D, and the contact area of the lifting magnet 21 with the foreign matter D), based on the specification information on the foreign matter D (for example, at least one of the type of the foreign matter D, the estimated weight of the foreign matter D, and the length or size of the foreign matter D).

The transport-device transport condition control section 39 controls the lifting magnet 21 as the transport device 20 such that the lifting magnet 21 lifts and transports the foreign matter D that is placed to the foreign-matter loading area 52 under the transport condition for transporting the foreign matter D using the lifting magnet 21, the transport condition being determined by the transport-device transport condition determination section 38. More specifically, in the example illustrated in FIG. 5, the transport-device transport condition control section 39 moves, vertically downward, the lifting magnet 21 placed at the position V right above the foreign matter D in the scrap pile SS that is placed. Then, the transport-device transport condition control section 39 moves the lifting magnet 21 vertically upward such that the lifting magnet 21 lifts the foreign matter D in the scrap pile SS that is placed under the determined transport condition for transporting the foreign matter D (for example, at least one of the magnetic force strength of the lifting magnet 21, the distance d between the magnet surface 21a of the lifting magnet 21 and the foreign matter D, and the contact area of the lifting magnet 21 with the foreign matter D). After that, the transport-device transport condition control section 39 horizontally moves the lifting magnet 21 to a position above the foreign-matter loading area 52 and decreases the magnetic force of the lifting magnet 21 to drop the foreign matter D onto the foreign-matter loading area 52.

Note that the magnetic force strength of the lifting magnet 21 as one example of the transport condition of the foreign matter D is adjusted by adjusting the magnitude of the voltage or current to be supplied to the lifting magnet 21.

In a case where the distance d between the magnet surface 21a of the lifting magnet 21 and the foreign matter D as one example of the transport condition of the foreign matter D is adjusted (see FIG. 6), the distance d between the magnet surface 21a of the lifting magnet 21 and the foreign matter D may be adjusted with the use of a sensor such as a range-finding sensor, or the distance d may be adjusted based on a captured image captured by a camera, for example. The lifting magnet 21 may be brought into contact with the foreign matter D once while the lifting magnet 21 is turned off, and the lifting magnet 21 may be lifted to control the distance d based on that state.

The contact area of the lifting magnet 21 with the foreign matter D as one example of the transport condition of the foreign matter D may be adjusted in such a manner that the area of the magnet surface 21a of the lifting magnet 21 is changed by adjusting the supply range of the voltage or current, or the magnet surface 21a of the lifting magnet 21 is inclined relative to the foreign matter D (see FIG. 7).

The transport-device transport condition determination section 38 determines the transport condition for transporting the foreign matter D using the lifting magnet 21 as the transport device 20 based on the specification information on the foreign matter D which specification information is specified by the foreign matter specification information specifying section 37, as described above. The transport-device transport condition control section 39 controls the lifting magnet 21 as the transport device 20 such that the lifting magnet 21 lifts and transports the foreign matter D that is placed under the transport condition for transporting the foreign matter D using the lifting magnet 21, the transport condition being determined by the transport-device transport condition determination section 38.

Hereby, it is possible to prevent the scrap S other than the foreign matter D from being lifted and transported together at the time when the foreign matter D is lifted from the scrap pile SS by the lifting magnet 21 and transported. That is, it is possible to reduce the amount of the scrap S to be removed together with the foreign matter D in the scrap pile SS.

Note that, in a case where the foreign matter D is a nonmagnetic material, the foreign matter D is not attracted to the lifting magnet 21. In this case, the foreign matter D as the nonmagnetic material is lifted together with the scrap S around the foreign matter D, or a transport device that lifts the foreign matter D without magnetic force, such as a grapple (see FIG. 11) or a crane, is used.

When no foreign matter D in the scrap pile SS is detected by the foreign matter detecting section 33, the transport control section 40 controls the lifting magnet 21 as the transport device 20 such that the lifting magnet 21 lifts and transports the scrap S in the scrap pile SS to the scrap loading area 51.

A host computer (not illustrated) is connected to the transport control section 40. The transport control section 40 receives stop position information on the semi-trailer 50 and positional information on the scrap loading area 51 from the host computer. When no foreign matter D in the scrap pile SS is detected by the foreign matter detecting section 33, the transport control section 40 horizontally moves the lifting magnet 21 based on the stop position information on the semi-trailer 50, received from the host computer, so that the lifting magnet 21 is placed at a position above a given piece of scrap S in the scrap pile SS on the loading deck of the semi-trailer 50. Subsequently, the transport control section 40 controls the lifting magnet 21 to move vertically downward to hold the scrap S and then controls the lifting magnet 21 to move vertically upward to lift the scrap S thus held. Then, the transport control section 40 horizontally moves the lifting magnet 21 holding the scrap S to a position right above the scrap loading area 51 and decreases the magnetic force of the lifting magnet 21 to drop the foreign matter D to the scrap loading area 51.

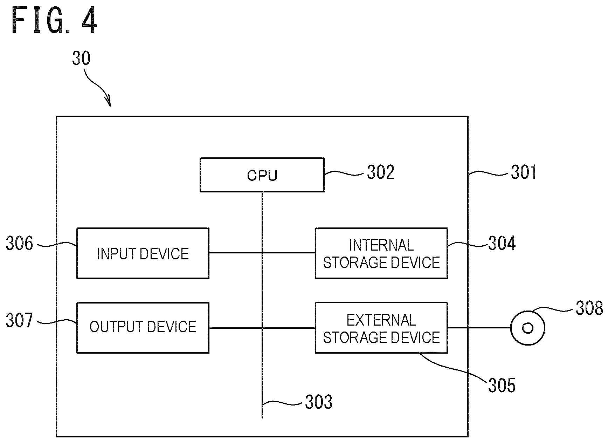

Subsequently, a hardware configuration of the control device 30 will be described with reference to FIG. 4. The control device 30 includes an arithmetic processing unit 301 including a CPU 302. An internal storage device 304 such as a RAM or a ROM, an external storage device 305, an input device 306 such as a keyboard and a mouse, and an output device 307 configured to output commands from the transport-device movement condition control section 36, the transport-device transport condition control section 39, and the transport control section 40 to the lifting magnet 21 as the transport device 20 are connected to the CPU 302 via an internal bus 303.

The external storage device 305 of the control device 30 includes a readable disk drive such as a hard disk drive or a solid state drive, and a drive device for CDs, DVDs, BDs, or the like to read data from a recording medium 308. The recording medium 308 storing a program to cause the control device 30 to execute the following functions is set in the external storage device 305, and a read program is installed in the disk drive. Here, the above functions include an imaging control function (step S1 described below) of the imaging control section 31, a captured image acquisition function (step S2 described below) of the captured image acquisition section 32, a foreign matter detection function (step S3 described below) of the foreign matter detecting section 33, a foreign matter positional information specifying function (step S4 described below) of the foreign matter positional information specifying section 34, a transport-device movement condition determination function (step S5 described below) of the transport-device movement condition determination section 35, a transport-device movement condition control function (step S6 described below) of the transport-device movement condition control section 36, a foreign matter specification information specifying function (step S7 described below) of the foreign matter specification information specifying section 37, a transport-device transport condition determination function (step S8 described below) of the transport-device transport condition determination section 38, a transport-device transport condition control function (step S9 described below) of the transport-device transport condition control section 39, and a scrap transport control function (step S10 described below) of the transport control section 40. The installation of the program is not limited to the case where the recording medium 308 is used and may be performed by downloading the program via a network.

In response to a command from the installed program, the CPU 302 of the control device 30 executes the imaging control function (step S1 described below) of the imaging control section 31, the captured image acquisition function (step S2 described below) of the captured image acquisition section 32, the foreign matter detection function (step S3 described below) of the foreign matter detecting section 33, the foreign matter positional information specifying function (step S4 described below) of the foreign matter positional information specifying section 34, the transport-device movement condition determination function (step S5 described below) of the transport-device movement condition determination section 35, the transport-device movement condition control function (step S6 described below) of the transport-device movement condition control section 36, the foreign matter specification information specifying function (step S7 described below) of the foreign matter specification information specifying section 37, the transport-device transport condition determination function (step S8 described below) of the transport-device transport condition determination section 38, the transport-device transport condition control function (step S9 described below) of the transport-device transport condition control section 39, and the scrap transport control function (step S10 described below) of the transport control section 40. The CPU 302 outputs commands from the transport-device movement condition control section 36, the transport-device transport condition control section 39, and the transport control section 40 to the lifting magnet 21 as the transport device 20.

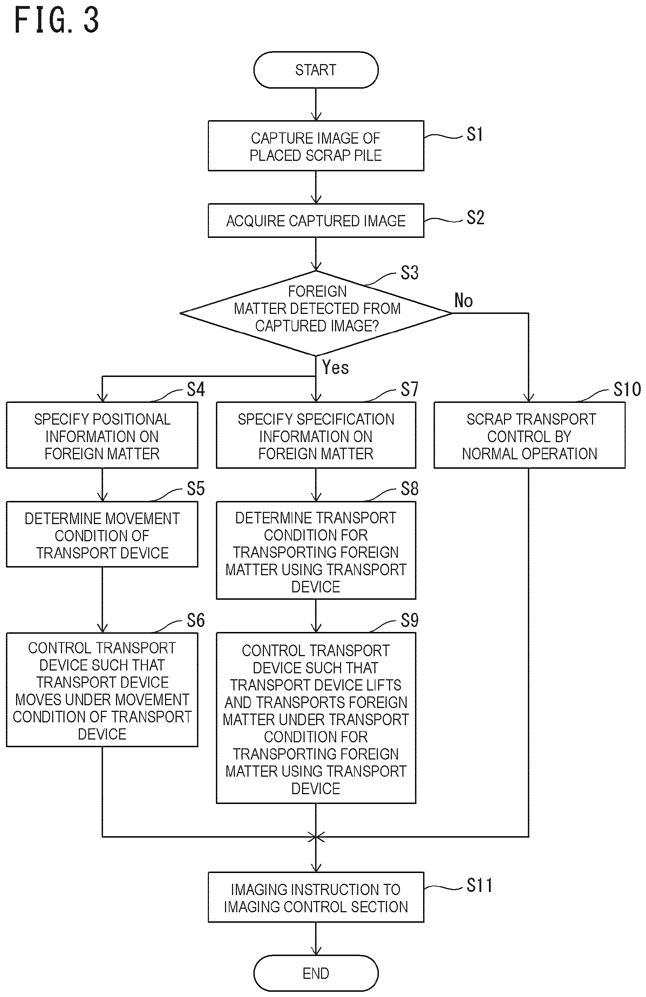

Next will be described the flow of a process in the foreign matter separation system 1 with reference to FIG. 3. FIG. 3 is a flowchart to describe the flow of the process in the foreign matter separation system 1 illustrated in FIG. 1.

First, in step S1, the imaging control section 31 of the control device 30 controls the imaging device 10 such that the imaging device 10 captures an image of the scrap pile SS placed on the loading deck of the semi-trailer 50 from above the loading deck, so that the imaging device 10 captures an image of the scrap pile SS (an imaging step). At the beginning of a foreign matter separation control, upon receipt of information indicating that the semi-trailer 50 on which the scrap pile SS is placed stops at a predetermined stop position from the host computer (not illustrated), the imaging control section 31 transmits an imaging command to the imaging device 10. The imaging control section 31 also transmits an imaging command to the imaging device 10 when an imaging instruction is transmitted to the imaging control section 31 in step S11 (described later).

Then, in step S2, the captured image acquisition section 32 of the control device 30 acquires a captured image G (see FIG. 5) captured in step S1 (a captured image acquisition step).

Subsequently, in step S3, the foreign matter detecting section 33 of the control device 30 detects the foreign matter D in the scrap pile SS from the captured image G acquired in step S2 (a foreign matter detecting step).

In step S3, when the foreign matter D is detected (when the determination result is YES), the process advances to step S4 and step S7, and when no foreign matter D is detected (when the determination result is NO), the process advances to step S10.

In step S4, the foreign matter D is detected in the scrap pile SS that is placed, the foreign matter positional information specifying section 34 of the control device 30 specifies the position (position coordinate) of the foreign matter D in the scrap pile SS from the captured image G acquired in step S2 (a foreign matter positional information specifying step).

Then, in step S5, the transport-device movement condition determination section 35 of the control device 30 determines a movement condition of the lifting magnet 21 constituting the transport device 20, based on the position (position coordinate) of the foreign matter D in the scrap pile SS, the position being specified in step S4 (a transport-device movement condition determination step). Here, the "movement condition" is a position condition of the destination, in the horizontal direction, of the lifting magnet 21 constituting the transport device 20, as described above.

Subsequently, in step S6, the transport-device movement condition control section 36 of the control device 30 controls the lifting magnet 21 constituting the transport device 20 such that the lifting magnet 21 moves under the movement condition for the lifting magnet 21 which movement condition is determined in step S5 (a transport-device movement condition control step).

In step S7, since the foreign matter D is detected in the scrap pile SS that is placed, the foreign matter specification information specifying section 37 of the control device 30 specifies specification information on the foreign matter D in the scrap pile SS (a foreign matter specification information specifying step). Here, the "specification information" is information for specifying the foreign matter D and is at least one of the type of the foreign matter D, the estimated weight of the foreign matter D, and the length or size of the foreign matter D, for example.

Subsequently, in step S8, the transport-device transport condition determination section 38 of the control device 30 determines a transport condition for transporting the foreign matter D using the lifting magnet 21 as the transport device 20 based on the specification information on the foreign matter D, specified in step S7 (a transport-device transport condition determination step). Here, the "transport condition" is a condition of the lifting magnet 21 at the time of lifting the foreign matter D, and is, for example, at least one of the magnetic force strength of the lifting magnet 21, the distance d between the magnet surface 21a of the lifting magnet 21 and the foreign matter D (see FIG. 6), and the contact area of the lifting magnet 21 with the foreign matter D. That is, the transport-device transport condition determination section 38 determines the transport condition for transporting the foreign matter D using the lifting magnet 21 by lifting only the foreign matter D (for example, at least one of the magnetic force strength of the lifting magnet 21, the distance d between the magnet surface 21a of the lifting magnet 21 and the foreign matter D, and the contact area of the lifting magnet 21 with the foreign matter D), based on the specification information on the foreign matter D (for example, at least one of the type of the foreign matter D, the estimated weight of the foreign matter D, and the length or size of the foreign matter D).

Subsequently, in step S9, the transport-device transport condition control section 39 of the control device 30 controls the lifting magnet 21 as the transport device 20 such that the lifting magnet 21 lifts and transports the foreign matter D that is placed to the foreign-matter loading area 52 under the transport condition for transporting the foreign matter D using the lifting magnet 21, the transport condition being determined in step S8 (a transport-device transport condition control step).

When no foreign matter D is detected in step S3 and the process advances to step S10, a normal operation is performed in step S10, so that the transport control section 40 of the control device 30 controls the lifting magnet 21 as the transport device 20 such that the lifting magnet 21 lifts and transports the scrap S in the scrap pile SS to the scrap loading area 51 (a scrap transport control step).

When step S6, step S9, and step S10 are finished, the process advances to step S11.

In step S11, the transport-device movement condition control section 36, the transport-device transport condition control section 39, and the transport control section 40 transmits an imaging instruction to the imaging control section 31 (an imaging instruction step).

Hereby, the process in the foreign matter separation system 1 is ended.

By repeating steps S1 to S11, all pieces of scrap S and all pieces of foreign matter D in the scrap pile SS placed on the loading deck of the semi-trailer 50 are transported to the scrap loading area 51 and the foreign-matter loading area 52, respectively.

Here, the flow of the process in the foreign matter separation system 1 will be more specifically described in terms of the example of the captured image G as illustrated in FIG. 5.

The captured image acquisition section 32 of the control device 30 acquires the captured image G (illustrated in FIG. 5) taken in step S1 through step S1 (the imaging step) and step S2 (the captured image acquisition step).

Subsequently, in step S3 (the foreign matter detecting step), the foreign matter detecting section 33 of the control device 30 detects the foreign matter D in the scrap pile SS from the captured image G. In the example of FIG. 5, one piece of foreign matter D in the scrap pile SS is detected.

Since one piece of foreign matter D in the scrap pile SS is detected, the process advances to step S4 (the foreign matter positional information specifying step) and step S7 (the foreign matter specification information specifying step).

First, in step S4 (the foreign matter positional information specifying step), the foreign matter positional information specifying section 34 of the control device 30 specifies the position (position coordinate) of the foreign matter D in the scrap pile SS from the captured image G.

Subsequently, in step S5 (the transport-device movement condition determination step), the transport-device movement condition determination section 35 of the control device 30 determines a movement condition of the lifting magnet 21 constituting the transport device 20, based on the specified position (position coordinate) of the foreign matter D in the scrap pile SS. In the example of FIG. 5, the movement condition of the lifting magnet 21 is the position V right above the foreign matter D in the scrap pile SS that is placed.

Subsequently, in step S6 (the transport-device movement condition control step), the transport-device movement condition control section 36 of the control device 30 controls the lifting magnet 21 constituting the transport device 20 such that the lifting magnet 21 moves under the movement condition of the lifting magnet 21 which movement condition is determined in step S5. In the example of FIG. 5, the transport-device movement condition control section 36 controls the lifting magnet 21 such that the lifting magnet 21 moves horizontally to the position V right above the foreign matter D in the scrap pile SS that is placed.

In step S7 (the foreign matter specification information specifying step), since the foreign matter D is detected in the scrap pile SS that is placed, the foreign matter specification information specifying section 37 of the control device 30 specifies specification information (at least one of the type of the foreign matter D, the estimated weight of the foreign matter D, and the length or size of the foreign matter D) of the foreign matter D in the scrap pile SS.

Subsequently, in step S8 (the transport-device transport condition determination step), the transport-device transport condition determination section 38 of the control device 30 determines a transport condition for transporting the foreign matter D using the lifting magnet 21 as the transport device 20 based on the specified specification information on the foreign matter D. More specifically, the transport-device transport condition determination section 38 determines the transport condition for transporting the foreign matter D using the lifting magnet 21 by lifting only the foreign matter D (for example, at least one of the magnetic force strength of the lifting magnet 21, the distance d between the magnet surface 21a of the lifting magnet 21 and the foreign matter D, and the contact area of the lifting magnet 21 with the foreign matter D), based on the specification information on the foreign matter D (at least one of the type of the foreign matter D, the estimated weight of the foreign matter D, and the length or size of the foreign matter D).

Subsequently, in step S9 (the transport-device transport condition control step), the transport-device transport condition control section 39 of the control device 30 controls the lifting magnet 21 as the transport device 20 such that the lifting magnet 21 lifts and transports the foreign matter D that is placed to the foreign-matter loading area 52 under the transport condition for transporting the foreign matter D using the lifting magnet 21, the transport condition being determined in step S8. In the example of FIG. 5, the transport-device transport condition control section 39 moves, vertically downward, the lifting magnet 21 placed at the position V right above the foreign matter D in the scrap pile SS that is placed. Then, the transport-device transport condition control section 39 moves the lifting magnet 21 vertically upward such that the lifting magnet 21 lifts the foreign matter D in the scrap pile SS that is placed under the determined transport condition of the foreign matter D (at least one of the magnetic force strength of the lifting magnet 21, the distance d between the magnet surface 21a of the lifting magnet 21 and the foreign matter D, and the contact area of the lifting magnet 21 with the foreign matter D). After that, the transport-device transport condition control section 39 horizontally moves the lifting magnet 21 to a position above the foreign-matter loading area 52 and decreases the magnetic force of the lifting magnet 21 to drop the foreign matter D onto the foreign-matter loading area 52.

Then, in step S11 (the imaging instruction step), the transport-device movement condition control section 36 and the transport-device transport condition control section 39 transmit an imaging instruction to the imaging control section 31.

In terms of the scrap S remaining in the scrap pile SS in FIG. 5, step S1, step S2, step S3, step S10, and step S11 are repeated so that all the remaining scrap S is transported to the scrap loading area 51 by the lifting magnet 21.

As described above, the foreign matter separation system 1 according to the first embodiment includes: the imaging device 10 configured to capture an image of the scrap pile SS that is placed; the lifting magnet 21 as the transport device 20 configured to lift and transport the foreign matter D or the scrap S in the scrap pile SS that is placed; and the control device 30 configured to control the imaging device 10 and the lifting magnet 21 as the transport device 20. The control device 30 detects the foreign matter D in the scrap pile SS from the captured image G taken by the imaging device 10. When the foreign matter D in the scrap pile SS is detected, the control device 30 specifies positional information on the foreign matter D in the scrap pile SS and specification information on the foreign matter D in the scrap pile SS, determines a movement condition of the lifting magnet 21 based on the specified positional information on the foreign matter D, and determines a transport condition for transporting the foreign matter D using the lifting magnet 21 based on the specified specification information on the foreign matter D. The control device 30 also controls the lifting magnet 21 such that the lifting magnet 21 moves under the determined movement condition of the lifting magnet 21, and also controls the lifting magnet 21 such that the lifting magnet 21 lifts and transports the foreign matter D that is placed to the foreign-matter loading area 52 under the determined transport condition for transporting the foreign matter D using the lifting magnet 21.

Hereby, only the foreign matter D contained in the scrap pile SS can be automatically removed, thereby making it possible to reduce the amount of scrap S to be removed together with the foreign matter D in the scrap pile SS.

In the foreign matter separation system 1 according to the first embodiment, the specification information on the foreign matter D is at least one of the type of the foreign matter D, the estimated weight of the foreign matter D, and the length or size of the foreign matter D.

Hereby, the control device 30 determines the transport condition for transporting the foreign matter D using the lifting magnet 21 based on at least one of the specified type of the foreign matter D, the specified estimated weight of the foreign matter D, and the specified length or size of the foreign matter D, and the control device 30 can control the lifting magnet 21 such that the lifting magnet 21 lifts and transports the foreign matter D that is placed to the foreign-matter loading area 52 under the determined transport condition for transporting the foreign matter D using the lifting magnet 21.

In the foreign matter separation system 1 according to the first embodiment, the control device 30 specifies the specification information on the foreign matter D by inputting the captured image G into a learning model trained using data set in which images corresponding to each type of the foreign matter D are associated with the type name of the foreign matter D, the weight of the foreign matter D, or the length and size of the foreign matter D.

Hereby, it is possible to accurately specify specification information on the foreign matter D in the scrap pile SS when the foreign matter D in the scrap pile SS is detected.

In the foreign matter separation system 1 according to the first embodiment, the transport device 20 is the lifting magnet 21 configured to magnetically attract the foreign matter D or the scrap by magnetic force to lift and transport the foreign matter D or the scrap S. The transport condition for transporting the foreign matter D using the transport device 20 (the lifting magnet 21) is at least one of the magnetic force strength of the lifting magnet 21, the distance d between the magnet surface 21a of the lifting magnet 21 and the foreign matter D, and the contact area of the lifting magnet 21 with the foreign matter D.

Hereby, the lifting magnet 21 can be controlled such that the lifting magnet 21 lifts and transports the foreign matter D that is placed to the foreign-matter loading area 52, based on at least one of the determined magnetic force strength of the lifting magnet 21, the determined distance d between the magnet surface 21a of the lifting magnet 21 and the foreign matter D, and the determined contact area of the lifting magnet 21 with the foreign matter D.

A foreign matter separation method according to the first embodiment is a foreign matter separation method for separating the foreign matter D contained in the scrap pile SS from the scrap S and includes: the imaging step (step S1) of the control device 30 controlling the imaging device 10 such that the imaging device 10 captures an image of the scrap pile SS that is placed; and the foreign matter detecting step (step S3) of the control device 30 detecting the foreign matter D in the scrap pile SS from the captured image G taken in the imaging step. The foreign matter separation method further includes: the foreign matter positional information specifying step (step S4) of the control device 30 specifying positional information on the foreign matter D in the scrap pile SS when the foreign matter D in the scrap pile SS is detected in the foreign matter detecting step; and the foreign matter specification information specifying step (step S7) of the control device 30 specifying specification information on the foreign matter D in the scrap pile SS when the foreign matter D in the scrap pile SS is detected in the foreign matter detecting step. The foreign matter separation method further includes: the transport-device movement condition determination step (step S5) of the control device 30 determining a movement condition of the lifting magnet 21 as the transport device 20 based on the positional information on the foreign matter D which positional information is specified in the foreign matter positional information specifying step; and the transport-device transport condition determination step (step S8) of the control device 30 determining a transport condition for transporting the foreign matter D using the lifting magnet 21 as the transport device 20 based on the specification information on the foreign matter D which specification information is specified in the foreign matter specification information specifying step. The foreign matter separation method further includes: the transport-device movement condition control step (step S6) of the control device 30 controlling the lifting magnet 21 as the transport device 20 such that the lifting magnet 21 moves under the movement condition of the lifting magnet 21 which movement condition is determined in the transport-device movement condition determination step; and the transport-device transport condition control step (step S9) of the control device 30 controlling the lifting magnet 21 as the transport device 20 such that the lifting magnet 21 lifts and transports the foreign matter D to the foreign-matter loading area 52 under the transport condition for transporting the foreign matter D using the lifting magnet 21, the transport condition being determined in the transport-device transport condition determination step.

Hereby, only the foreign matter D contained in the scrap pile SS can be automatically removed, thereby making it possible to reduce the amount of scrap S to be removed together with the foreign matter D in the scrap pile SS.

A program according to the first embodiment is a program causing the control device 30 to execute: the imaging step (step S1) of controlling the imaging device 10 such that the imaging device 10 captures an image of the scrap pile SS that is placed; the foreign matter detecting step (step S3) of detecting the foreign matter D in the scrap pile SS from the captured image G taken in the imaging step; the foreign matter positional information specifying step (step S4) of specifying positional information on the foreign matter D in the scrap pile SS when the foreign matter D in the scrap pile SS is detected in the foreign matter detecting step; the foreign matter specification information specifying step (step S7) of specifying specification information on the foreign matter D in the scrap pile SS when the foreign matter D in the scrap pile SS is detected in the foreign matter detecting step; the transport-device movement condition determination step (step S5) of determining a movement condition of the lifting magnet 21 as the transport device based on the positional information on the foreign matter D which positional information is specified in the foreign matter positional information specifying step; the transport-device transport condition determination step (step S8) of determining a transport condition for transporting the foreign matter D using the lifting magnet 21 as the transport device, based on the specification information on the foreign matter D which specification information is specified in the foreign matter specification information specifying step; the transport-device movement condition control step (step S6) of controlling the lifting magnet 21 such that the lifting magnet 21 moves under the movement condition of the lifting magnet 21 which movement condition is determined in the transport-device movement condition determination step; and the transport-device transport condition control step (step S9) of controlling the lifting magnet 21 such that the lifting magnet 21 lifts and transports the foreign matter D to the foreign-matter loading area 52 under the transport condition for transporting the foreign matter D using the lifting magnet 21, the transport condition being determined in the transport-device transport condition determination step.

Hereby, in response to an order from the program, the control device 30 executes the imaging step (step S1), the foreign matter detecting step (step S3), the foreign matter positional information specifying step (step S4), the foreign matter specification information specifying step (step S7), the transport-device movement condition determination step (step S5), the transport-device transport condition determination step (step S8), the transport-device movement condition control step (step S6), and the transport-device transport condition control step (step S9). Consequently, only the foreign matter D contained in the scrap pile SS can be automatically removed, thereby making it possible to reduce the amount of scrap S to be removed together with the foreign matter D in the scrap pile SS.

The computer-readable recording medium 308 storing the program according to the first embodiment is a computer-readable recording medium storing a program causing the control device 30 to execute: the imaging step (step S1) of controlling the imaging device 10 such that the imaging device 10 captures an image of the scrap pile SS that is placed; the foreign matter detecting step (step S3) of detecting the foreign matter D in the scrap pile SS from the captured image G taken in the imaging step; the foreign matter positional information specifying step (step S4) of specifying positional information on the foreign matter D in the scrap pile SS when the foreign matter D in the scrap pile SS is detected in the foreign matter detecting step; the foreign matter specification information specifying step (step S7) of specifying specification information on the foreign matter D in the scrap pile SS when the foreign matter D in the scrap pile SS is detected in the foreign matter detecting step; the transport-device movement condition determination step (step S5) of determining a movement condition of the lifting magnet 21 as the transport device based on the positional information on the foreign matter D which positional information is specified in the foreign matter positional information specifying step; the transport-device transport condition determination step (step S8) of determining a transport condition for transporting the foreign matter D using the lifting magnet 21 as the transport device, based on the specification information on the foreign matter D which specification information is specified in the foreign matter specification information specifying step; the transport-device movement condition control step (step S6) of controlling the lifting magnet 21 such that the lifting magnet 21 moves under the movement condition of the lifting magnet 21 which movement condition is determined in the transport-device movement condition determination step; and the transport-device transport condition control step (step S9) of controlling the lifting magnet 21 such that the lifting magnet 21 lifts and transports the foreign matter D to the foreign-matter loading area 52 under the transport condition for transporting the foreign matter D using the lifting magnet 21, the transport condition being determined in the transport-device transport condition determination step.

Hereby, in response to an order from the program stored in the recording medium 308, the control device 30 executes the imaging step (step S1), the foreign matter detecting step (step S3), the foreign matter positional information specifying step (step S4), the foreign matter specification information specifying step (step S7), the transport-device movement condition determination step (step S5), the transport-device transport condition determination step (step S8), the transport-device movement condition control step (step S6), and the transport-device transport condition control step (step S9). Consequently, only the foreign matter D contained in the scrap pile SS can be automatically removed, thereby making it possible to reduce the amount of scrap S to be removed together with the foreign matter D in the scrap pile SS.

### (Second Embodiment)

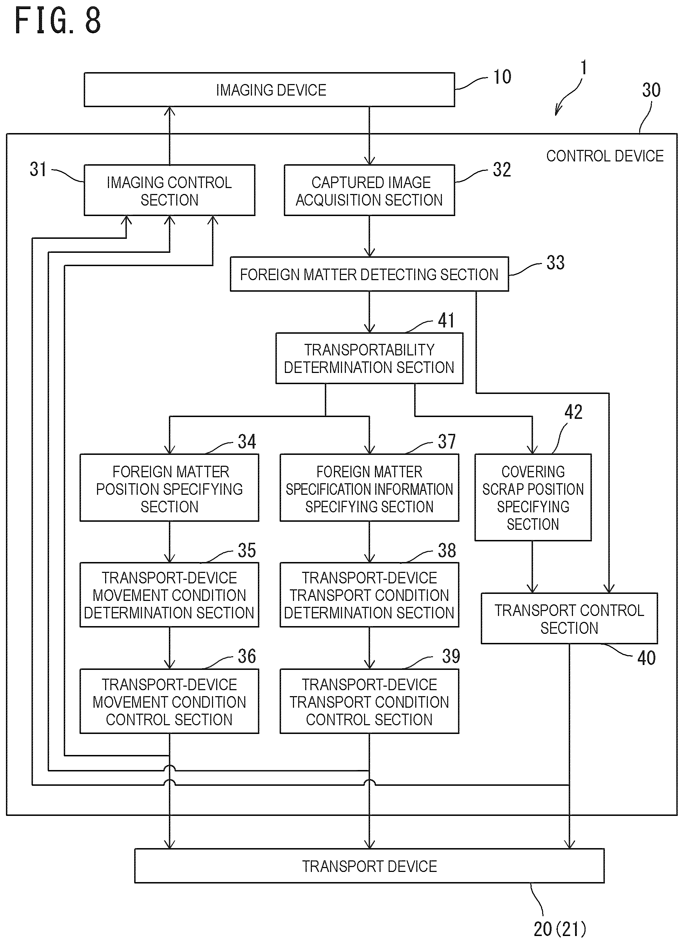

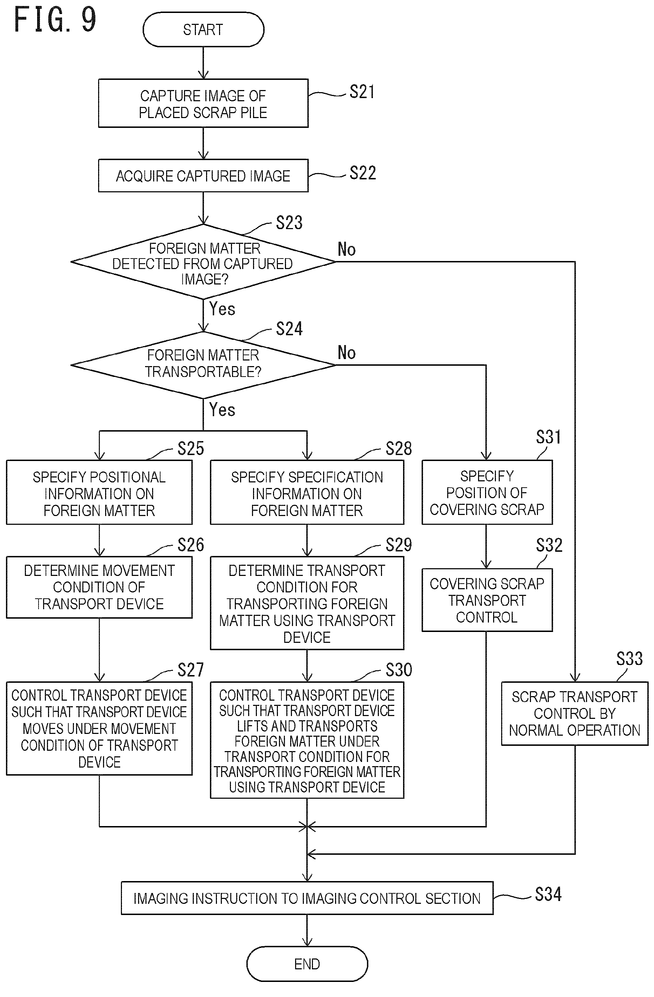

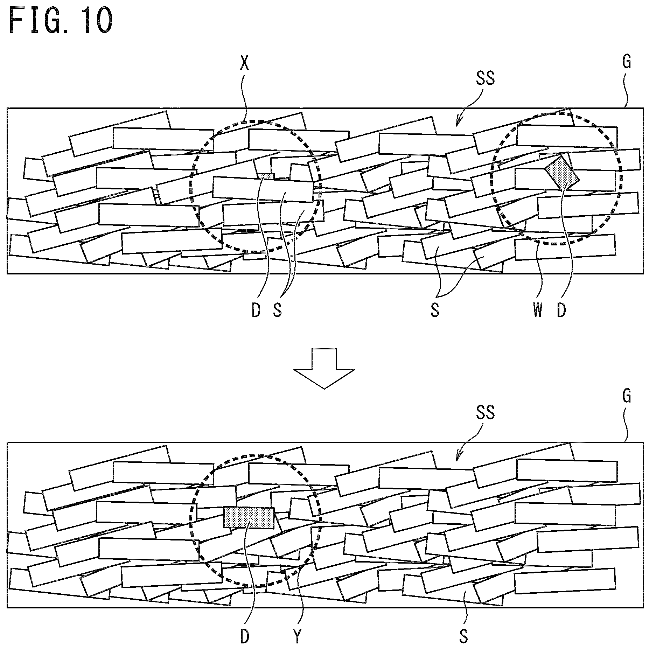

Next will be described a foreign matter separation system, a foreign matter separation method, a program, and a computer-readable recording medium storing the program according to a second embodiment of the present invention, with reference to FIGS. 8 to 10. FIG. 8 is a functional block diagram of the foreign matter separation system 1 according to the second embodiment of the present invention. FIG. 9 is a flowchart to describe the flow of the process in the foreign matter separation system illustrated in FIG. 8. FIG. 10 illustrates examples of a captured image of a scrap pile placed on a loading deck of a semi-trailer, taken by an imaging device. A captured image of the initial state of the scrap pile placed on the loading deck of the semi-trailer is illustrated on the upper side of FIG. 10, and a captured image after foreign matter having a large degree of exposure and scrap covering foreign matter having a small degree of exposure are removed from the initial state is illustrated on the lower side of FIG. 10.

Similarly to the foreign matter separation system 1 according to the first embodiment illustrated in FIG. 1, the foreign matter separation system 1 according to the second embodiment of the present invention, illustrated in FIG. 8, is configured to separate the foreign matter D contained in the scrap pile SS placed on the loading deck of the semi-trailer 50 from the scrap S. The foreign matter separation system 1 illustrated in FIG. 8 transports the scrap S and the foreign matter D in the scrap pile SS placed on the loading deck of the semi-trailer 50 to the scrap loading area 51 and the foreign-matter loading area 52, respectively.

Differently from the foreign matter separation system 1 according to the first embodiment, the control device 30 of the foreign matter separation system 1 according to the second embodiment, illustrated in FIG. 8, includes a transportability determination section 41 (see FIG. 8) configured to determine whether or not the foreign matter D is transportable, based on the degree of exposure of the foreign matter D in the captured image G (see FIG. 10) when the foreign matter D in the scrap pile SS is detected. When the transportability determination section 41 determines that the foreign matter D is transportable, the control device 30 performs a process (steps S25 to S30 in FIG. 9) of controlling the lifting magnet 21 as the transport device 20 to lift and transport the foreign matter D in the scrap pile SS that is placed to the foreign-matter loading area 52. When the transportability determination section 41 determines that the foreign matter D is not transportable, the control device 30 performs a process (step S31 and step S32 in FIG. 9) of controlling the transport device 20 to transport the scrap S covering the foreign matter D in the scrap pile SS to the scrap loading area 51 (see FIG. 1).

More specifically, similarly to the foreign matter separation system 1 according to the first embodiment, the foreign matter separation system 1 according to the second embodiment, illustrated in FIG. 8 includes the imaging device 10, the lifting magnet 21 as the transport device 20, and the control device 30.

The imaging device 10 is a camera configured to capture an image of the scrap pile SS placed on the loading deck of the semi-trailer 50 from above the loading deck.

When the foreign matter D is detected in the scrap pile SS placed on the loading deck of the semi-trailer 50 (when the foreign matter detecting section 33 in FIG. 8 detects the foreign matter D), the transport device 20 lifts and transports the foreign matter D (some pieces of scrap S may be also included in addition to the foreign matter D). When no foreign matter D is detected (when the foreign matter detecting section 33 detects no foreign matter D), the transport device 20 lifts and transports the scrap S in the scrap pile SS. Similarly to the first embodiment, the transport device 20 is the lifting magnet 21 configured to magnetically attract the foreign matter D or the scrap by magnetic force to lift and transport the foreign matter D or the scrap S. The lifting magnet 21 as the transport device 20 is movable vertically and horizontally (see FIG. 1). The lifting magnet 21 moves vertically downward and holds the foreign matter D or the scrap S, moves vertically upward to lift the foreign matter D or the scrap S thus held, and then moves horizontally to transport the foreign matter D or the scrap S thus lifted.

The control device 30 is configured to control the imaging device 10 and the lifting magnet 21 as the transport device 20.

As illustrated in FIG. 8, the control device 30 includes the imaging control section 31, the captured image acquisition section 32, the foreign matter detecting section 33, the transportability determination section 41, the foreign matter positional information specifying section 34, the transport-device movement condition determination section 35, the transport-device movement condition control section 36, the foreign matter specification information specifying section 37, the transport-device transport condition determination section 38, the transport-device transport condition control section 39, a covering scrap position specifying section 42, and the transport control section 40.

The imaging control section 31 controls the imaging device 10 such that the imaging device 10 captures an image of the scrap pile SS placed on the loading deck of the semi-trailer 50.

The captured image acquisition section 32 acquires a captured image G (see FIG. 10) captured by the imaging device 10. As described above, FIG. 10 illustrates examples of the captured image G of the scrap pile SS placed on the loading deck of the semi-trailer 50, taken by the imaging device 10. The captured image G of the initial state of the scrap pile SS placed on the loading deck of the semi-trailer 50 is illustrated on the upper side of FIG. 10, and the captured image G after the foreign matter D (a portion indicated by a reference sign W) having a large degree of exposure and the scrap S (a portion indicated by a reference sign X) covering the foreign matter D having a small degree of exposure are removed from the initial state is illustrated on the lower side of FIG. 10.

The foreign matter detecting section 33 detects the foreign matter D in the scrap pile SS from the captured image G acquired by the captured image acquisition section 32. Any method is usable as a method for detecting the foreign matter D from the captured image G by the foreign matter detecting section 33. In the present embodiment, the foreign matter detecting section 33 detects the foreign matter D in the scrap pile SS such that the captured image G acquired by the image acquisition section 32 is input into a learning model trained using captured images of the scrap pile SS containing the foreign matter D.

The transportability determination section 41 determines whether or not the foreign matter D is transportable, based on the degree of exposure of the foreign matter D in the captured image G when the foreign matter D in the scrap pile SS is detected by the foreign matter detecting section 33.

Here, the degree of exposure of the foreign matter D can be calculated by comparing the length or size of the foreign matter D that is actually observed with the estimated length or estimated size of the foreign matter D, estimated from foreign matter specification information specified with the use of a learning model trained in advance using data set in which images corresponding to each type of the foreign matter D are associated with the type name of the foreign matter D and the length and size of the foreign matter D. More specifically, the percentage (%) of the length or size of the foreign matter D that is actually observed relative to the estimated length or estimated size of the foreign matter can be regarded as the degree of exposure of the foreign matter D. The transportability determination section 41 determines whether or not the foreign matter D is transportable, based on whether or not the degree of exposure of the foreign matter D is equal to or more than a predetermined threshold. That is, in a case where the degree of exposure of the foreign matter D is the percentage (%) of the length or size of the foreign matter D that is actually observed relative to the estimated length or estimated size of the foreign matter, when the percentage (%) is equal to or more than the predetermined threshold, the transportability determination section 41 determines that the foreign matter is transportable, but when the percentage (%) is less than the predetermined threshold, the transportability determination section 41 determines that the foreign matter is not transportable. The threshold in this case is 20%, for example.

The degree of exposure of the foreign matter D can also be calculated by comparing a predetermined area (m²) of foreign matter for each type of foreign matter with the area (m²) of the foreign matter D that is actually observed. More specifically, a value (m²) of the area (m²) of the foreign matter D that is actually observed relative to the predetermined area (m²) of foreign matter for each type of foreign matter can be regarded as the degree of exposure of the foreign matter D. When the value (m²) is equal to or more than a predetermined threshold, the transportability determination section 41 determines that the foreign matter D is transportable, but when the value (m²) is less than the predetermined threshold, the transportability determination section 41 determines that the foreign matter D is not transportable. The threshold in this case is 0.1 m² in a case where the foreign matter D is a motor, for example.

When the transportability determination section 41 determines that the foreign matter D is transportable, the foreign matter positional information specifying section 34 specifies the position (position coordinate) of the foreign matter D in the scrap pile SS from the captured image G.

The transport-device movement condition determination section 35 determines a movement condition of the lifting magnet 21 constituting the transport device 20, based on the position (position coordinate) of the foreign matter D in the scrap pile SS, the position being specified by the foreign matter positional information specifying section 34. Here, the "movement condition" is a position condition of a destination, in the horizontal direction, of the lifting magnet 21 constituting the transport device 20.

The transport-device movement condition control section 36 controls the lifting magnet 21 constituting the transport device such that the lifting magnet 21 moves under the movement condition of the lifting magnet 21 which movement condition is determined by the transport-device movement condition determination section 35.

When the transportability determination section 41 determines that the foreign matter D is transportable, the foreign matter specification information specifying section 37 specifies specification information on the foreign matter D in the scrap pile SS. Here, the "specification information" is information for specifying the foreign matter D and is at least one of the type of the foreign matter D, the estimated weight of the foreign matter D, and the length or size of the foreign matter D, for example. Any method is usable for the foreign matter specification information specifying section 37 to specify the specification information on the foreign matter. In the present embodiment, the foreign matter specification information specifying section 37 specifies the specification information on the foreign matter D by inputting the captured image G into a learning model trained using data set in which images corresponding to each type of the foreign matter D are associated with the type name of the foreign matter D, the weight of the foreign matter D, or the length and size of the foreign matter D.

The transport-device transport condition determination section 38 determines a transport condition for transporting the foreign matter D using the lifting magnet 21 as the transport device 20, based on the specification information on the foreign matter D which specification information is specified by the foreign matter specification information specifying section 37. Here, the "transport condition" is a condition of the lifting magnet 21 at the time of lifting the foreign matter D, and is, for example, at least one of the magnetic force strength of the lifting magnet 21, the distance d between the magnet surface 21a of the lifting magnet 21 and the foreign matter D, and the contact area of the lifting magnet 21 with the foreign matter D. That is, the transport-device transport condition determination section 38 determines the transport condition for transporting the foreign matter D using the lifting magnet 21 by lifting only the foreign matter D (for example, at least one of the magnetic force strength of the lifting magnet 21, the distance d between the magnet surface 21a of the lifting magnet 21 and the foreign matter D, and the contact area of the lifting magnet 21 with the foreign matter D), based on the specification information on the foreign matter D (for example, at least one of the type of the foreign matter D, the estimated weight of the foreign matter D, and the length or size of the foreign matter D).

The transport-device transport condition control section 39 controls the lifting magnet 21 as the transport device 20 such that the lifting magnet 21 lifts and transports the foreign matter D that is placed to the foreign-matter loading area 52 under the transport condition for transporting the foreign matter D using the lifting magnet 21, the transport condition being determined by the transport-device transport condition determination section 38.

When the transportability determination section 41 determines that the foreign matter D is not transportable, the covering scrap position specifying section 42 specifies the position (position coordinate) of the scrap S covering the foreign matter D in the scrap pile SS from the captured image G.

When no foreign matter D in the scrap pile SS is detected by the foreign matter detecting section 33, the transport control section 40 controls the lifting magnet 21 as the transport device 20 such that the lifting magnet 21 lifts and transports the scrap S in the scrap pile SS. When the position (position coordinate) of the scrap S covering the foreign matter D in the scrap pile SS is specified by the covering scrap position specifying section 42, the transport control section 40 controls the lifting magnet 21 as the transport device 20 such that the lifting magnet 21 lifts and transports the scrap S covering the foreign matter D in the scrap pile SS to the scrap loading area 51.

The control device 30 has the same hardware configuration as the control device 30 of the foreign matter separation system 1 according to the first embodiment, and as illustrated in FIG. 4, the control device 30 is constituted by the arithmetic processing unit 301 including the CPU 302. The internal storage device 304 such as a RAM or a ROM, the external storage device 305, the input device 306 such as a keyboard and a mouse, and the output device 307 configured to output commands from the transport-device movement condition control section 36, the transport-device transport condition control section 39, and the transport control section 40 to the lifting magnet 21 as the transport device 20 are connected to the CPU 302 via the internal bus 303.

The external storage device 305 of the control device 30 includes a readable disk drive such as a hard disk drive or a solid state drive, and a drive device for CDs, DVDs, BDs, or the like to read data from the recording medium 308. The recording medium 308 storing a program to cause the control device 30 to execute the following functions is set in the external storage device 305, and a read program is installed in the disk drive. Here, the above-mentioned functions include an imaging control function (step S21 described below) of the imaging control section 31, a captured image acquisition function (step S22 described below) of the captured image acquisition section 32, a foreign matter detection function (step S23 described below) of the foreign matter detecting section 33, a transportability determination function (step S24 described below) of the transportability determination section 41, a foreign matter positional information specifying function (step S25 described below) of the foreign matter positional information specifying section 34, a transport-device movement condition determination function (step S26 described below) of the transport-device movement condition determination section 35, a transport-device movement condition control function (step S27 described below) of the transport-device movement condition control section 36, a foreign matter specification information specifying function (step S28 described below) of the foreign matter specification information specifying section 37, a transport-device transport condition determination function (step S29 described below) of the transport-device transport condition determination section 38, a transport-device transport condition control function (step S30 described below) of the transport-device transport condition control section 39, a covering scrap position specifying function (step S31 described below) of the covering scrap position specifying section 42, a covering scrap transport control function (step S32 described below) of the transport control section 40, and a scrap transport control function (step S33 described below) of the transport control section 40. The installation of the program is not limited to the case where the recording medium 308 is used and may be performed by downloading the program via a network.

In response to an order from the installed program, the CPU 302 of the control device 30 executes the imaging control function (step S21 described below) of the imaging control section 31, the captured image acquisition function (step S22 described below) of the captured image acquisition section 32, the foreign matter detection function (step S23 described below) of the foreign matter detecting section 33, the transportability determination function (step S24 described below) of the transportability determination section 41, the foreign matter positional information specifying function (step S25 described below) of the foreign matter positional information specifying section 34, the transport-device movement condition determination function (step S26 described below) of the transport-device movement condition determination section 35, the transport-device movement condition control function (step S27 described below) of the transport-device movement condition control section 36, the foreign matter specification information specifying function (step S28 described below) of the foreign matter specification information specifying section 37, the transport-device transport condition determination function (step S29 described below) of the transport-device transport condition determination section 38, the transport-device transport condition control function (step S30 described below) of the transport-device transport condition control section 39, the covering scrap position specifying function (step S31 described below) of the covering scrap position specifying section 42, the covering scrap transport control function (step S32 described below) of the transport control section 40, and the scrap transport control function (step S33 described below) of the transport control section 40. The CPU 302 outputs commands from the transport-device movement condition control section 36, the transport-device transport condition control section 39, and the transport control section 40 to the lifting magnet 21 as the transport device 20.

Next will be described the flow of a process in the foreign matter separation system 1 according to the second embodiment with reference to FIG. 9. FIG. 9 is a flowchart to describe the flow of the process in the foreign matter separation system 1 illustrated in FIG. 8.

First, in step S21, the imaging control section 31 of the control device 30 controls the imaging device 10 to capture an image of the scrap pile SS placed on the loading deck of the semi-trailer 50 from above the loading deck, so that the imaging device 10 captures an image of the scrap pile SS (an imaging step). At the beginning of the foreign matter separation control, the imaging control section 31 transmits an imaging command to the imaging device 10 upon receipt of information indicating that the semi-trailer 50 on which the scrap pile SS is loaded stops at a predetermined stop position from the host computer (not illustrated). The imaging control section 31 also transmits an imaging command to the imaging device 10 when an imaging instruction is transmitted to the imaging control section 31 in step S34 (described later).

Then, in step S22, the captured image acquisition section 32 of the control device 30 acquires the captured image G (see FIG. 10) taken in step S1 (a captured image acquisition step).

Subsequently, in step S23, the foreign matter detecting section 33 of the control device 30 detects the foreign matter D in the scrap pile SS from the captured image G acquired in step S22 (a foreign matter detecting step).

In step S3, when the foreign matter D is detected (when the determination result is YES), the process advances to step S24, but when no foreign matter D is detected (when the determination result is NO), the process advances to step S33.

In step S24, since the foreign matter D is detected in the scrap pile SS that is placed, the transportability determination section 41 determines whether or not the foreign matter D is transportable, based on the degree of exposure of the foreign matter D in the captured image G (a transportability determination step). The degree of exposure of the foreign matter D and the criteria for the transportability determination are as described above.

Then, in step S24, when the foreign matter D is transportable (when the determination result is YES), the process advances to step S25 and step S28, but when the foreign matter D is not transportable (when the determination result is NO), the process advances to step S31.

In step S25, since the foreign matter D is determined to be transportable, the foreign matter positional information specifying section 34 of the control device 30 specifies the position (position coordinate) of the foreign matter D in the scrap pile SS from the captured image G acquired in step S22 (a foreign matter positional information specifying step).

Subsequently, in step S26, the transport-device movement condition determination section 35 of the control device 30 determines a movement condition of the lifting magnet 21 constituting the transport device 20, based on the position (position coordinate) of the foreign matter D in the scrap pile SS, the position being specified in step S25 (a transport-device movement condition determination step). Here, the "movement condition" is a position condition of the destination, in the horizontal direction, of the lifting magnet 21 constituting the transport device 20, as described above.

Subsequently, in step S27, the transport-device movement condition control section 36 of the control device 30 controls the lifting magnet 21 such that the lifting magnet 21 moves under the movement condition of the lifting magnet 21 constituting the transport device 20 which movement condition is determined in step S26 (a transport-device movement condition control step).

In step S28, since the foreign matter D is determined to be transportable, the foreign matter specification information specifying section 37 of the control device 30 specifies specification information on the foreign matter D in the scrap pile SS (a foreign matter specification information specifying step). Here, the "specification information" is information for specifying the foreign matter D and is at least one of the type of the foreign matter D, the estimated weight of the foreign matter D, and the length or size of the foreign matter D, for example.

Subsequently, in step S29, the transport-device transport condition determination section 38 of the control device 30 determines a transport condition for transporting the foreign matter D using the lifting magnet 21 as the transport device 20, based on the specification information on the foreign matter D which specification information is specified in step S28 (a transport-device transport condition determination step). Here, the "transport condition" is a condition of the lifting magnet 21 at the time of lifting the foreign matter D, and is, for example, at least one of the magnetic force strength of the lifting magnet 21, the distance d between the magnet surface 21a of the lifting magnet 21 and the foreign matter D (see FIG. 6), and the contact area of the lifting magnet 21 with the foreign matter D. That is, the transport-device transport condition determination section 38 determines the transport condition for transporting the foreign matter D using the lifting magnet 21 by lifting only the foreign matter D (for example, at least one of the magnetic force strength of the lifting magnet 21, the distance d between the magnet surface 21a of the lifting magnet 21 and the foreign matter D, and the contact area of the lifting magnet 21 with the foreign matter D), based on the specification information on the foreign matter D (for example, at least one of the type of the foreign matter D, the estimated weight of the foreign matter D, and the length or size of the foreign matter D).

Subsequently, in step S30, the transport-device transport condition control section 39 of the control device 30 controls the lifting magnet 21 as the transport device 20 such that the lifting magnet 21 lifts and transports the foreign matter D that is placed to the foreign-matter loading area 52 under the transport condition for transporting the foreign matter D using the lifting magnet 21, the transport condition being determined in step S29 (a transport-device transport condition control step). When the foreign matter D is determined not to be transportable in step S24 and the process advances to step S31, the covering scrap position specifying section 42 of the control device 30 specifies the position (position coordinate) of the scrap S covering the foreign matter D in the scrap pile SS from the captured image G in step S31 (a covering scrap position specifying step).

Subsequently, in step S32, the transport control section 40 controls the lifting magnet 21 as the transport device 20 such that the lifting magnet 21 lifts and transports the scrap S covering the foreign matter D in the scrap pile SS to the scrap loading area 51 (a covering scrap transport control step).

When no foreign matter D is detected in step S23 and the process advances to step S33, a normal operation is performed in step S33, so that the transport control section 40 of the control device 30 controls the lifting magnet 21 as the transport device 20 such that the lifting magnet 21 lifts and transports the scrap S in the scrap pile SS to the scrap loading area 51 (a scrap transport control step).

When step S27, step S30, step S32, and step S33 are finished, the process advances to step S34.

In step S34, the transport-device movement condition control section 36, the transport-device transport condition control section 39, and the transport control section 40 transmit an imaging instruction to the imaging control section 31 (an imaging instruction step).

Hereby, the process in the foreign matter separation system 1 is ended.

By repeating steps S21 to S34, all pieces of scrap S and all pieces of foreign matter D in the scrap pile SS placed on the loading deck of the semi-trailer 50 are transported to the scrap loading area 51 and the foreign-matter loading area 52, respectively.

Here, in terms of the examples of the captured image G as illustrated in FIG. 10, the flow of the process in the foreign matter separation system 1 will be more specifically described.

At the beginning of the scrap pile SS placed on the loading deck of the semi-trailer 50, the captured image acquisition section 32 of the control device 30 acquires the captured image G (illustrated on the upper side of FIG. 10) taken in step S21 through step S21 (the imaging step) and step S22 (the captured image acquisition step).

Subsequently, in step S23 (the foreign matter detecting step), the foreign matter detecting section 33 of the control device 30 detects the foreign matter D in the scrap pile SS from the captured image G. In the example illustrated on the upper side of FIG. 10, two pieces of foreign matter D are detected in the scrap pile SS. One piece of foreign matter D (the portion indicated by the reference sign W) out of the two pieces of foreign matter D is not covered with the scrap S and has a large degree of exposure, and the other piece of foreign matter D (the portion indicated by the reference sign X) out of the two pieces of foreign matter D is covered with the scrap S and has a small degree of exposure.

Since the two pieces of foreign matter D are detected in the scrap pile SS, the process advances to step S24.

In step S24 (the transportability determination step), since the foreign matter D is detected in the scrap pile SS that is placed, the transportability determination section 41 determines whether or not the foreign matter D is transportable, based on the degree of exposure of the foreign matter D in the captured image G. Here, in the example illustrated on the upper side of FIG. 10, since the one piece of foreign matter D (the portion indicated by the reference sign W) out of the detected pieces of foreign matter D is not covered with the scrap S and has a large degree of exposure, the degree of exposure of the foreign matter D is equal to or more than the predetermined threshold and is determined to be transportable. In the meantime, since the other piece of foreign matter D (the portion indicated by the reference sign X) out of the detected pieces of foreign matter D is covered with the scrap S and has a small degree of exposure, the degree of exposure of the foreign matter D is less than the predetermined threshold and is determined not to be transportable.

Since the one piece of foreign matter D (the portion indicated by the reference sign W) is determined to be transportable, the process advances step S25 and step S28.

In step S25 (the foreign matter positional information specifying step), the foreign matter positional information specifying section 34 of the control device 30 specifies the position (position coordinate) of the one piece of foreign matter D in the scrap pile SS from the captured image G acquired in step S22 (the foreign matter positional information specifying step).

Subsequently, in step S26 (the transport-device movement condition determination step), the transport-device movement condition determination section 35 of the control device 30 determines a movement condition of the lifting magnet 21 constituting the transport device 20, based on the specified position (position coordinate) of the one piece of foreign matter D in the scrap pile SS. In the case of the one piece of foreign matter D illustrated on the upper side of FIG. 10, the movement condition of the lifting magnet 21 is a position W right above the one piece of foreign matter D in the scrap pile SS that is placed.

Subsequently, in step S27 (the transport-device movement condition control step), the transport-device movement condition control section 36 of the control device 30 controls the lifting magnet 21 constituting the transport device 20 such that the lifting magnet 21 moves under the movement condition of the lifting magnet 21 which movement condition is determined in step S26. In the case of the one piece of foreign matter D on the upper side of FIG. 10, the transport-device movement condition control section 36 controls the lifting magnet 21 such that the lifting magnet 21 moves horizontally to the position W right above the one piece of foreign matter D in the scrap pile SS that is placed.

In step S28 (the foreign matter specification information specifying step), the foreign matter specification information specifying section 37 of the control device 30 specifies specification information (at least one of the type of the foreign matter D, the estimated weight of the foreign matter D, and the length or size of the foreign matter D) of the one piece of foreign matter D in the scrap pile SS.

Subsequently, in step S29 (the transport-device transport condition determination step), the transport-device transport condition determination section 38 of the control device 30 determines a transport condition for transporting the one piece of foreign matter D using the lifting magnet 21 as the transport device 20 based on the specified specification information on the one piece of foreign matter D. More specifically, the transport-device transport condition determination section 38 determines the transport condition for transporting the one piece of foreign matter D using the lifting magnet 21 by lifting only the one piece of foreign matter D (at least one of the magnetic force strength of the lifting magnet 21, the distance d between the magnet surface 21a of the lifting magnet 21 and the foreign matter D, and the contact area of the lifting magnet 21 with the foreign matter D), based on the specification information on the one piece of foreign matter D (at least one of the type of the foreign matter D, the estimated weight of the foreign matter D, and the length or size of the foreign matter D).

Subsequently, in step S30 (the transport-device transport condition control step), the transport-device transport condition control section 39 of the control device 30 controls the lifting magnet 21 as the transport device 20 such that the lifting magnet 21 lifts and transports the one piece of foreign matter D that is placed to the foreign-matter loading area 52 under the transport condition for transporting the one piece of foreign matter D using the lifting magnet 21, the transport condition being determined in step S29. In the case of the one piece of foreign matter D on the upper side of FIG. 10, the transport-device transport condition control section 39 moves, vertically downward, the lifting magnet 21 placed at the position W right above the one piece of foreign matter D in the scrap pile SS that is placed. Then, the transport-device transport condition control section 39 moves the lifting magnet 21 vertically upward such that the lifting magnet 21 lifts the one piece of foreign matter D in the scrap pile SS that is placed under the determined transport condition of the one piece of foreign matter D (at least one of the magnetic force strength of the lifting magnet 21, the distance d between the magnet surface 21a of the lifting magnet 21 and the foreign matter D, and the contact area of the lifting magnet 21 with the foreign matter D). After that, the transport-device transport condition control section 39 horizontally moves the lifting magnet 21 to a position above the foreign-matter loading area 52 and decreases the magnetic force of the lifting magnet 21 to drop the one piece of foreign matter D onto the foreign-matter loading area 52.

The other piece of foreign matter D on the upper side of FIG. 10 is determined not to be transportable in step S24 (the transportability determination step), and therefore, the process advances to step S31.

In step S31 (the covering scrap position specifying step), the covering scrap position specifying section 42 of the control device 30 specifies the position (position coordinate) of the scrap S covering the other piece of foreign matter D in the scrap pile SS from the captured image G.

Subsequently, in step S32 (the covering scrap transport control step), the transport control section 40 controls the lifting magnet 21 as the transport device 20 such that the lifting magnet 21 lifts and transports the scrap S covering the other piece of foreign matter D in the scrap pile SS to the scrap loading area 51. In the case of the other piece of foreign matter D on the upper side of FIG. 10, the transport control section 40 controls the lifting magnet 21 such that the lifting magnet 21 moves horizontally to the position X right above the scrap S covering the other piece of foreign matter D in the scrap pile SS. The transport control section 40 moves the lifting magnet 21 placed at the position X vertically downward. The transport control section 40 further moves the lifting magnet 21 vertically upward such that the lifting magnet 21 lifts the scrap S covering the other piece of foreign matter D in the scrap pile SS by a magnetic force allowing the lifting magnet 21 to lift the scrap S. Then, the transport control section 40 horizontally moves the lifting magnet 21 to a position above the scrap loading area 51 and decreases the magnetic force of the lifting magnet 21 to drop the scrap S that has covered the other piece of foreign matter D to the scrap loading area 51.

Then, in step S34 (the imaging instruction step), the transport-device movement condition control section 36, the transport-device transport condition control section 39, and the transport control section 40 transmit an imaging instruction to the imaging control section 31.

After that, the process returns to step S21 (the imaging step), and the imaging control section 31 controls the imaging device 10 to capture an image of the scrap pile SS placed on the loading deck of the semi-trailer 50 from above the loading deck, so that the imaging device 10 captures an image of the scrap pile SS.

Subsequently, in step S22 (the captured image acquisition step), the captured image acquisition section 32 acquires a captured image G captured in step S21. The captured image G on the lower side of FIG. 10 corresponds to the captured image G at this time because the one piece of foreign matter D having a large degree of exposure and the scrap S covering the other piece of foreign matter D having a small degree of exposure have been removed in the above-mentioned process, and the other piece of foreign matter D whose degree of exposure has increased and the scrap S remain in the scrap pile SS.

After that, step S23 (the foreign matter detecting step), step S24 (the transportability determination step), step S25 (the foreign matter positional information specifying step), step S26 (the transport-device movement condition determination step), step S27 (the transport-device movement condition control step), step S28 (the foreign matter specification information specifying step), step S29 (the transport-device transport condition determination step), and step S30 (the transport-device transport condition control step) are performed, so that the other piece of foreign matter D is dropped onto the foreign-matter loading area 52.

Hereby, the pieces of foreign matter D in the scrap pile SS that is placed are removed.

Then, by repeating steps S21 to S34, all pieces of scrap S and all pieces of foreign matter D in the scrap pile SS placed on the loading deck of the semi-trailer 50 are transported to the scrap loading area 51 and the foreign-matter loading area 52, respectively.

Note that, in a case where pieces of scrap S covering the other piece of foreign matter D having a small degree of exposure remain, the remaining pieces of scrap S can be transported by repeating step S21, step S22, step S23, step S24, step S31, and step S32.

As described above, the control device 30 of the foreign matter separation system 1 according to the second embodiment includes the transportability determination section 41 configured to determine whether or not the foreign matter D is transportable, based on the degree of exposure of the foreign matter D in the captured image G in a case where the foreign matter D in the scrap pile SS is detected. When the transportability determination section 41 determines that the foreign matter D is transportable, the control device 30 performs the process (steps S25 to S30 in FIG. 9) of controlling the lifting magnet 21 as the transport device 20 such that the lifting magnet 21 lifts and transports the foreign matter D in the scrap pile SS that is placed to the foreign-matter loading area 52. When the transportability determination section 41 determines that the foreign matter D is not transportable, the control device 30 performs the process (step S31 and step S32 in FIG. 9) of controlling the transport device such that the transport device transports the scrap S covering the foreign matter D in the scrap pile SS to the scrap loading area 51.

Hereby, the transportability of the foreign matter D is determined before the foreign matter D in the scrap pile SS that is placed is lifted and transported, and when the foreign matter D is transportable, the foreign matter D is transported to the foreign-matter loading area 52, but when the foreign matter D is not transportable, the scrap S covering the foreign matter D is transported to the scrap loading area 51. This makes it possible to more surely prevent the scrap S in the scrap pile SS from being removed together with the foreign matter D.

The embodiments of the present invention have been described above, but the present invention is not limited to them and can be performed with various alterations and modifications.

For example, the foreign matter separation systems 1 according to the first and second embodiments use the lifting magnet 21 as the transport device 20 but are not limited to the case where the lifting magnet 21 is used. For example, a grapple 22 may be used as the transport device 20 as illustrated in FIG. 11, or a shovel 23 may be used as the transport device as illustrated in FIG. 12.

In a case where the grapple 22 is used as the transport device 20 as illustrated in FIG. 11, a transport condition for transporting the foreign matter D using the grapple 22 as the transport device 20 is at least one of a gripping force of each of a plurality of grippers 22a of the grapple 22 and a distance B between the grippers 22a, for example. The transport-device transport condition determination section 38 determines a transport condition for transporting the foreign matter D using the grapple 22 only by lifting the foreign matter D (at least one of the gripping force of each of the plurality of grippers 22a of the grapple 22 and the distance between the grippers 22a), based on specification information on the foreign matter D (at least one of the type of the foreign matter D, the estimated weight of the foreign matter D, and the length or size of the foreign matter D). Then, the transport-device transport condition control section 39 controls the grapple 22 to lift the foreign matter D from the scrap pile SS under the determined transport condition of the foreign matter D (at least one of the gripping force of each of the plurality of grippers 22a of the grapple 22 and the distance between the grippers 22a). This makes it possible to prevent the scrap S other than the foreign matter D from being lifted together at the time when the foreign matter D is lifted and removed.

In a case where the shovel 23 is used as the transport device 20 as illustrated in FIG. 12, a transport condition for transporting the foreign matter D using the shovel 23 as the transport device 20 is, for example, the tilt of a boom 23a of the shovel 23 (an inclination angle θ of the boom 23a from the horizontal direction), the tilt of an arm 23b or a bucket 23c, or the like. The transport-device transport condition determination section 38 determines a transport condition for transporting the foreign matter D using the shovel 23 by lifting only the foreign matter D (the tilt of the boom 23a of the shovel 23 (the inclination angle θ of the boom 23a from the horizontal direction), the tilt of the arm 23b or the bucket 23c), based on specification information on the foreign matter D (at least one of the type of the foreign matter D, the estimated weight of the foreign matter D, and the length or size of the foreign matter D). Then, the transport-device transport condition control section 39 controls the shovel 23 to lift the foreign matter D from the scrap pile SS under the determined transport condition of the foreign matter D (the tilt of the boom 23a of the shovel 23 (the inclination angle θ of the boom 23a from the horizontal direction), the tilt of the arm 23b or the bucket 23c). This makes it possible to prevent the scrap S other than the foreign matter D from being lifted together at the time when the foreign matter D is lifted and removed.

In the foreign matter separation system 1 according to the first embodiment, the imaging device 10 captures an image of the scrap pile SS, and in a case where the control device 30 detects the foreign matter D in the scrap pile SS from the captured image G, the control device 30 controls the lifting magnet 21 such that the lifting magnet 21 lifts and transports the foreign matter D to the foreign-matter loading area 52.

Alternatively, like a foreign matter separation system according to a modification (not illustrated), an imaging device may capture an image of the scrap pile SS, and when a control device detects the foreign matter D in the scrap pile SS from the captured image G, the control device may control a lifting magnet as a transport device such that the lifting magnet lifts only the scrap S other than the foreign matter D detected in the scrap pile SS and transports it to the scrap loading area 51.

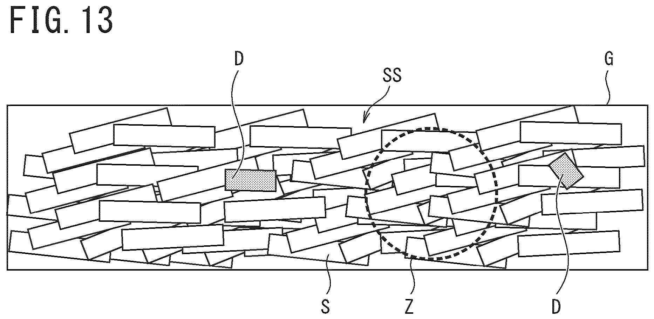

This will be described more specifically with reference to FIG. 13. The control device controls the imaging device to capture an image of the scrap pile SS placed on the loading deck of the semi-trailer 50 from above the loading deck, so that the imaging device captures an image of the scrap pile SS.

Subsequently, the control device acquires the captured image G (see FIG. 13) taken by the imaging device.

Then, the control device detects the foreign matter D in the scrap pile SS from the captured image G.

Subsequently, since the foreign matter D is detected in the scrap pile SS that is placed in FIG. 13, the control device specifies the position (position coordinate) of the foreign matter D in the scrap pile SS from the captured image G, and specifies specification information on the foreign matter D in the scrap pile SS.

Then, the control device controls the lifting magnet as the transport device such that the lifting magnet moves horizontally to a position Z right above a position (where the scrap S is present) that avoids the foreign matter D in the scrap pile SS that is placed.

Subsequently, the control device moves, vertically downward, the lifting magnet placed at the position Z right above the position (where the scrap S is present) that avoids the foreign matter D in the scrap pile SS that is placed and then moves the lifting magnet vertically upward to lift the scrap S in the scrap pile SS that is placed by a magnetic force allowing the lifting magnet to lift the scrap S. Then, the control device horizontally moves the lifting magnet to a position above the scrap loading area 51 and decreases the magnetic force of the lifting magnet to drop the scrap S onto the scrap loading area 51.

By repeating the above steps, the scrap S can be transported to the scrap loading area 51 while the foreign matter D remains.

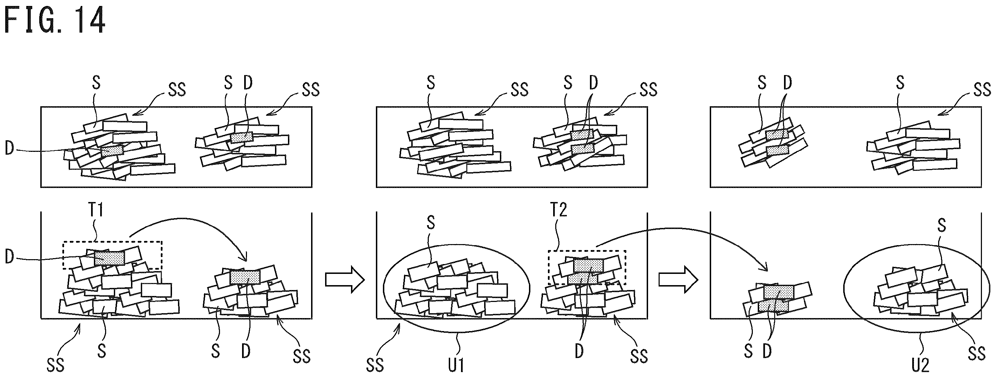

In the foreign matter separation system according to the modification, in a case where the scrap S cannot be lifted due to the foreign matter D being obstructive, the foreign matter D may be moved appropriately so that the scrap S can be lifted and transported, as illustrated in FIG. 14. That is, in FIG. 14, in a case where the scrap S cannot be lifted due to the foreign matter D being obstructive, part T1 of the scrap pile SS, containing the foreign matter D, is moved aside, and then, an accumulation U1 of remaining scrap S is lifted and transported. In terms of the moved part T1 of the scrap pile SS, containing the foreign matter D, part T2 of the scrap pile SS, containing the part T1 of the scrap pile SS, is moved aside, and then, an accumulation U2 of remaining scrap S is lifted and transported. This operation may be repeated. In a case where the foreign matter D is moved aside to a floor surface or the ground, a transport condition for transporting the foreign matter D using the transport device is determined based on foreign matter specification information similarly to the first embodiment and the second embodiment, and the foreign matter D is lifted and placed on the floor surface or the ground.

An area where the scrap pile SS is to be placed is not limited to the loading deck of the semi-trailer 50 and may be a yard or the like.

### Reference Signs List

1: foreign matter separation system
10: imaging device
20: transport device
21: lifting magnet
22: grapple
22a: gripper
23: shovel
23a: boom
23b: arm
23c: bucket
30: control device
31: imaging control section
32: captured image acquisition section
33: foreign matter detecting section
34: foreign matter positional information specifying section
35: transport-device movement condition determination section
36: transport-device movement condition control section
37: foreign matter specification information specifying section
38: transport-device transport condition determination section
39: transport-device transport condition control section
40: transport control section
301: arithmetic processing unit
302: CPU
303: internal bus
304: internal storage device
305: external storage device
306: input device
307: output device
308: recording medium
D: foreign matter
G: captured image
S: scrap
SS: scrap pile

## Claims

1. A foreign matter separation system for separating foreign matter contained in a scrap pile from scrap, the foreign matter separation system comprising:
an imaging device configured to capture an image of the scrap pile that is placed;
a transport device configured to lift and transport the foreign matter or the scrap in the scrap pile that is placed; and
a control device configured to control the imaging device and the transport device in the following manner:
the control device detects the foreign matter in the scrap pile from the captured image captured by the imaging device;
the control device specifies positional information on the foreign matter in the scrap pile and specification information on the foreign matter in the scrap pile when the foreign matter in the scrap pile is detected;
the control device determines a movement condition of the transport device based on the specified positional information on the foreign matter;
the control device determines a transport condition for transporting the foreign matter using the transport device, based on the specified specification information on the foreign matter;
the control device controls the transport device such that the transport device moves under the determined movement condition of the transport device; and
the control device controls the transport device such that the transport device lifts and transports the foreign matter that is placed to a foreign-matter loading area under the determined transport condition for transporting the foreign matter using the transport device.

2. The foreign matter separation system according to claim 1, wherein
the specification information on the foreign matter is at least one of a type of the foreign matter, an estimated weight of the foreign matter, and a length or size of the foreign matter.

3. The foreign matter separation system according to claim 2, wherein
the control device specifies the specification information on the foreign matter by inputting the captured image into a learning model trained using data set in which images corresponding to each type of foreign matter are associated with a type name of the foreign matter, a weight of the foreign matter, or the length and size of the foreign matter.

4. The foreign matter separation system according to claim 3, wherein
the transport device is a lifting magnet configured to magnetically attract the foreign matter or the scrap by magnetic force to lift and transport the foreign matter or the scrap, and
the transport condition for transporting the foreign matter using the transport device is at least one of magnetic force strength of the lifting magnet, a distance between a magnet surface of the lifting magnet and the foreign matter, and a contact area between the lifting magnet and the foreign matter.

5. The foreign matter separation system according to claim 3, wherein
the transport device is a grapple including a plurality of grippers and configured to grip and lift the foreign matter or the scrap by the plurality of grippers to transport the foreign matter, and
the transport condition for transporting the foreign matter using the transport device is at least one of a gripping force of each of the plurality of grippers of the grapple and a distance between the grippers.

6. The foreign matter separation system according to any one of claims 1 to 5, wherein
the control device includes a transportability determination section configured to determine whether or not the foreign matter is transportable, based on a degree of exposure of the foreign matter in the captured image when the foreign matter in the scrap pile is detected,
when the transportability determination section determines that the foreign matter is transportable, the control device performs a process of controlling the transport device to lift and transport the foreign matter in the scrap pile that is placed to the foreign-matter loading area, and
when the transportability determination section determines that the foreign matter is not transportable, the control device performs a process of controlling the transport device to transport scrap covering the foreign matter in the scrap pile to a scrap loading area.

7. A foreign matter separation method for separating foreign matter contained in a scrap pile from scrap, the method comprising:
a control device controlling an imaging device such that the imaging device captures an image of the scrap pile that is placed;
the control device detecting the foreign matter in the scrap pile from the captured image;
the control device specifying positional information on the foreign matter in the scrap pile when the foreign matter in the scrap pile is detected;
the control device specifying specification information on the foreign matter in the scrap pile when the foreign matter in the scrap pile is detected;
the control device determining a movement condition of a transport device based on the specified positional information on the foreign matter;
the control device determining a transport condition for transporting the foreign matter using the transport device based on the specified specification information on the foreign matter;
the control device controlling the transport device such that the transport device moves under the determined movement condition of the transport device; and
the control device controlling the transport device such that the transport device lifts and transports the foreign matter to a foreign-matter loading area under the determined transport condition for transporting the foreign matter using the transport device.

8. A program causing a control device to execute the followings:
controlling an imaging device to capture an image of a scrap pile that is placed;
detecting foreign matter in the scrap pile from the captured image;
specifying positional information on the foreign matter in the scrap pile when the foreign matter in the scrap pile is detected;
specifying specification information on the foreign matter in the scrap pile when the foreign matter in the scrap pile is detected;
determining a movement condition of a transport device based on the specified positional information on the foreign matter;
determining a transport condition for transporting the foreign matter using the transport device, based on the specified specification information on the foreign matter;
controlling the transport device such that the transport device moves under the determined movement condition of the transport device; and
controlling the transport device such that the transport device lifts and transports the foreign matter to a foreign-matter loading area under the determined transport condition for transporting the foreign matter using the transport device.

9. A computer-readable recording medium storing a program causing a control device to execute the followings:
controlling an imaging device to capture an image of a scrap pile that is placed;
detecting foreign matter in the scrap pile from the captured image;
specifying positional information on the foreign matter in the scrap pile when the foreign matter in the scrap pile is detected;
specifying specification information on the foreign matter in the scrap pile when the foreign matter in the scrap pile is detected;
determining a movement condition of a transport device based on the specified positional information on the foreign matter;
determining a transport condition for transporting the foreign matter using the transport device, based on the specified specification information on the foreign matter;
controlling the transport device such that the transport device moves under the determined movement condition of the transport device; and
controlling the transport device such that the transport device lifts and transports the foreign matter to a foreign-matter loading area under the determined transport condition for transporting the foreign matter using the transport device.
